# EUROPEAN PATENT SPECIFICATION

(11) **EP 4 038 923 B1**
(45) Date of publication and mention of the grant of the patent: **10.04.2024**
(21) Application number: 20786268.1
(22) Date of filing: 01.10.2020
(51) Int. Cl.: H04W 12/02, H04W 12/08, H04W 48/10, H04W 84/04, H04W 12/037, H04W 12/76

(54) **CONCEALING INFORMATION IN A WIRELESS COMMUNICATION NETWORK**
VERSCHLEIERUNG VON INFORMATIONEN IN EINEM DRAHTLOSKOMMUNIKATIONSNETZWERK
DISSIMULATION D'INFORMATIONS DANS UN RÉSEAU DE COMMUNICATION SANS FIL

(30) Priority: 04.10.2019 US 201962910765 P
(43) Date of publication of application: 10.08.2022
(73) Proprietor: TELEFONAKTIEBOLAGET LM ERICSSON (PUBL), 164 83 Stockholm (SE)
(72) Inventor: BEN HENDA, Noamen, 162 47 Vällingby (SE); HEDMAN, Peter, 252 50 Helsingborg (SE); SCHLIWA-BERTLING, Paul, 590 71 Ljungsbro (SE)
(74) Representative: Ericsson
(86) International application number: PCT/EP2020/077491
(87) International publication number: WO 2021/064092

(56) References cited:
- "3rd Generation Partnership Project; Technical Specification Group Services and System Aspects; Study on enhancement of 5G System (5GS) for vertical and Local Area Network (LAN) services (Release 16)", 3GPP STANDARD; TECHNICAL REPORT; 3GPP TR 23.734, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.2.0, 11 June 2019 (2019-06-11), pages 1-117, XP051753966, [retrieved on 2019-06-11]
- "3rd Generation Partnership Project; Technical Specification Group Services and System Aspects; Study on security for 5GS enhanced support of Vertical and LAN Services; (Release 16)", 3GPP DRAFT; S3-193132-V2 TR 33819-120-CL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3 9 September 2019 (2019-09-09), XP051784011, Retrieved from the Internet: URL:http://www.3gpp.org/ftp/tsg_sa/WG3_Sec urity/TSGS3_96_Wroclaw/Docs/S3-193132.zip [retrieved on 2019-09-09] cited in the application
- ERICSSON: "Alignments and corrections to Non-Public Network functionality", 3GPP DRAFT; S2-1907045_CR-23501-NPN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sapporo, Japan; 20190624 - 20190628 18 June 2019 (2019-06-18), XP051752019, Retrieved from the Internet: URL:http://www.3gpp.org/ftp/tsg%5Fsa/WG2%5 FArch/TSGS2%5F134%5FSapporo/Docs/S2%2D1907 045%2Ezip [retrieved on 2019-06-18]

## Description

### TECHNICAL FIELD

The present application relates generally to a wireless communication network and relates more particularly to concealment of information in such a network.

### BACKGROUND

A wireless communication network provides wireless access to wireless devices via one or more cells that provide coverage over respective areas. The network to which a cell provides access (i.e., the network to which the cell is associated) may be a public network or a non-public network. A non-public network (NPN) is a network that is intended for non-public use. An NPN may for instance be intended for the sole use of a private entity such as an enterprise. Regardless, an NPN may be a standalone NPN (SNPN) that is capable of operating without dependency on a Public Land Mobile Network (PLMN). In this case, the SNPN may be identified by a combination of a PLMN ID and a Network ID (NID). Or, an NPN may be a Public Network integrated NPN (PNiNPN) that is deployed with the support of a PLMN. In this case, for example, a PLMN may dedicate a network slice to the PNiNPN and employ the use of a Closed Access Group (CAG) for access control.

A cell heretofore transmits information (e.g., system information) that advertises with which network the cell is associated. The cell may for instance transmit a PLMN identifier (ID) that identifies a public network with which the cell is associated. Or, if the cell is associated with a standalone NPN, the cell may transmit a PLMN ID in conjunction with an NID. Or, if the cell is associated with a PNiNPN, the cell may transmit a CAG ID to indicate that the cell is associated with a certain CAG, e.g., dedicated to the PNiNPN.

Advertising the identity of the network with which a cell is associated advantageously assists wireless devices in identifying to which cell to request access. However, this creates a privacy or security threat. Indeed, a malicious eavesdropper may positively identify which cell(s) are associated with a particular network. This association may prove sensitive under some circumstances, though, such as where the network is dedicated to a Law Enforcement Agency (LEA).

3GPP TR 23.734 V16.2.0, 11 June 2019 (2019-06-11), pages 1-117, XP051753966, is a study on enhancement of 5G System (5GS) for vertical and Local Area Network (LAN) services.

Challenges exist therefore in enabling a wireless device to access a cell associated with a certain network, while also concealing the cell's association with that certain network from unauthorized parties.

### SUMMARY

According to claim 1, the invention provides a method performed by a wireless device. The method comprises receiving, via a first cell of a public network, secured control plane signaling which indicates one or more security parameters usable by the wireless device to obtain information concealed by a second cell of a non-public network.

The information concealed by the second cell includes system information for the second cell.

In some embodiments, the information concealed by the second cell includes an identifier associated with the second cell. In this case, the identifier is a closed access group, CAG, identifier or a network identifier.

In some embodiments, the information concealed by the second cell includes information that indicates with which network the second cell is associated and/or with which type of network the second cell is associated.

In some embodiments, the one or more security parameters include mapping information for mapping (i) non-concealed information that the second cell transmits; to (ii) the information concealed by the second cell. In this case, the method further comprises using the mapping information to map the non-concealed information to the information concealed by the second cell. In still other embodiments, the non-concealed information includes a temporary or pseudonym identifier associated with the second cell, and the information concealed by the second cell is an actual identifier associated with the second cell. In still other embodiments, the method further comprises obtaining validity information usable for determining whether the non-concealed information is valid. In this case, the method further comprises using or not using the mapping information for mapping the non-concealed information to the information concealed by the second cell, depending respectively on whether or not the non-concealed information is valid according to the validity information.

In some embodiments, the method further comprises using the one or more security parameters to obtain the information concealed by the second cell, and identifying and/or accessing the second cell using the information concealed by the second cell.

According to claim 8, the invention also provides a method performed by a core network node. The method comprises transmitting, via a first cell of a public network, secured control plane signaling which indicates one or more security parameters usable by a wireless device to obtain information concealed by a second cell of a non-public network.

The information concealed by the second cell includes system information for the second cell.

In some embodiments, the information concealed by the second cell includes an identifier associated with the second cell. In this case, the identifier is a closed access group, CAG, identifier or a network identifier.

In some embodiments, the information concealed by the second cell includes information that indicates with which network the second cell is associated and/or with which type of network the second cell is associated.

In some embodiments, the one or more security parameters include mapping information for mapping (i) non-concealed information that the second cell transmits; to (ii) the information concealed by the second cell. In still other embodiments, the non-concealed information includes a temporary or pseudonym identifier associated with the second cell. In this case, the information concealed by the second cell is an actual identifier associated with the second cell. In still other embodiments, the method further comprises transmitting, to the wireless device, validity information usable by the wireless device for determining whether the non-concealed information is valid.

According to claim 14, the invention also provides a wireless device configured to perform the steps described above for a wireless device.

According to claim 15, the invention also provides a core network node configured to perform the steps described above for a core network node.

According to claim 16, the invention also provides a computer program comprising instructions which, when executed by at least one processor, causes the processor to carry out the steps described above for a wireless device.

### BRIEF DESCRIPTION OF THE DRAWINGS

Figure 1 is a block diagram of a wireless communication network according to some embodiments.
Figure 2 is a logic flow diagram of a method performed by a wireless device according to some embodiments.
Figure 3 is a logic flow diagram of a method performed by a network node according to some embodiments.
Figure 4 is a block diagram of a wireless device according to some embodiments.
Figure 5 is a block diagram of a network node according to some embodiments.
Figure 6 is a block diagram of a 5G system according to some embodiments.
Figure 7 is a block diagram of a deployment of cells according to some embodiments.
Figure 8 is a call flow diagram between a UE, a RAN, and a core network according to some embodiments.
Figure 9 is a block diagram of a wireless communication network according to some embodiments.
Figure 10 is a block diagram of a user equipment according to some embodiments.
Figure 11 is a block diagram of a virtualization environment according to some embodiments.
Figure 12 is a block diagram of a communication network with a host computer according to some embodiments.
Figure 13 is a block diagram of a host computer according to some embodiments.
Figure 14 is a flowchart illustrating a method implemented in a communication system, in accordance with one embodiment.
Figure 15 is a flowchart illustrating a method implemented in a communication system, in accordance with one embodiment.
Figure 16 is a flowchart illustrating a method implemented in a communication system, in accordance with one embodiment.
Figure 17 is a flowchart illustrating a method implemented in a communication system, in accordance with one embodiment.

### DETAILED DESCRIPTION

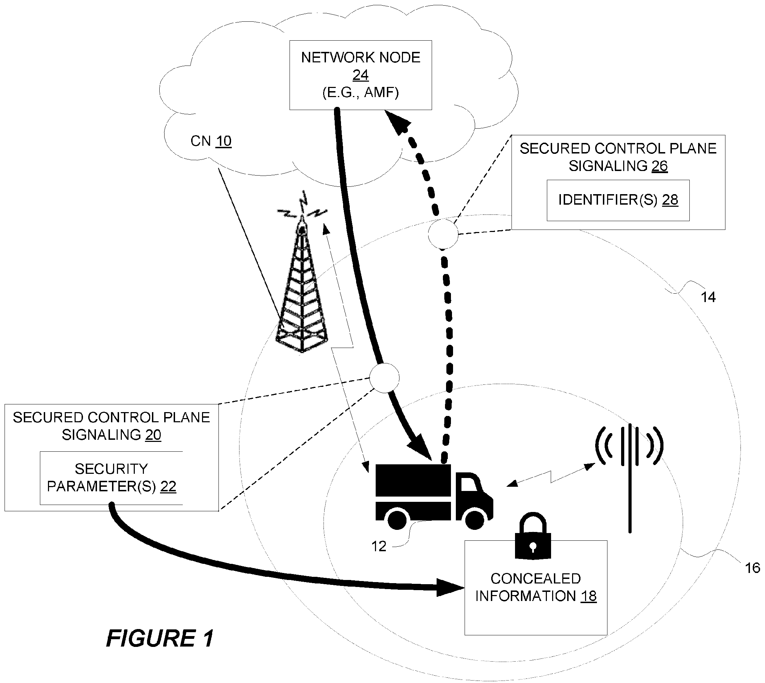

The invention is described in relation to figures 1-8. The embodiments of the remaining figures are to be seen as background information useful for understanding the invention.

Figure 1 shows a wireless device 12 according to some embodiments. The wireless device 12 may be embedded in or otherwise associated with a vehicle, as shown, or may be any type of device that is configured and/or capable of wireless communication.

The wireless device 12 as shown is capable of accessing a first cell 14. In some embodiments, the first cell 14 is a so-called open cell. In these and other embodiments, the first cell 14 may advertise with which network the first cell 14 is associated, e.g., by transmitting a Public Land Mobile Network (PLMN) identity (ID) for anyone to read. The first cell 14 may for instance transmit system information in an open manner, i.e., without concealing it.

A second cell 16 by contrast conceals certain information 18. According to the invention, the concealed information 18 includes system information for the second cell, for example an identifier associated with the second cell 16, information that indicates with which network the second cell 16 is associated, and/or information that indicates which type of network the second cell 16 is associated. For example, where the second cell 16 is associated with a public network, the information 18 concealed by the second cell 16 may include a PLMN ID that identifies the PLMN with which the second cell 16 is associated. Or, where the second cell 16 is associated with a standalone non-public network (NPN), the information 18 concealed by the second cell may include a PLMN ID and NID combination with which the second cell 16 is associated. Or, if the second cell 16 is associated with a public network integrated NPN, information 18 concealed by the second cell 16 may include a closed access group (CAG) identifier (CAG ID) with which the second cell 16 is associated. In one such embodiment, the second cell 16 may just advertise its physical cell identity (PCI), but nonetheless conceal its CAG ID, so as to conceal the association of the second cell 16 with that CAG ID.

Note that in some embodiments where the second cell 16 is associated with an NPN, the second cell 16 may be dedicated to providing access to that NPN, i.e., such that the second cell 16 may be referred to as a dedicated cell. Regardless, with the information 18 concealed, the second cell 16 may also be referred to as a protected cell.

In some embodiments, the second cell 16 may conceal the information 18 in the sense that second cell 16 makes the information 18 unobtainable, inaccessible, and/or undecipherable to wireless devices that are not authorized to obtain, access, and/or decipher the information 18. In some embodiments, for example, the second cell 16 may encrypt the information 18 and transmit (e.g., broadcast) the encrypted information, so that only wireless devices capable of decrypting the encrypted information may obtain and decipher that information 18. Such decryption may for instance require a certain decryption key and/or decryption algorithm. Or, the second cell 16 may conceal the information 18 by refraining from transmitting that concealed information 18, but instead transmitting non-concealed (e.g., unencrypted) information that is mapped to the concealed information 18. The second cell 16 may for instance transmit a temporary or pseudonym identifier that is mapped to the actual identifier associated with the second cell 16, e.g., a temporary or pseudonym CAG ID that is mapped to the actual CAG ID associated with the second cell 16. Either way, only wireless devices capable of mapping the non-concealed information to the concealed information 18 may obtain that concealed information 18.

According to the invention, the wireless device 12 receives signaling 20 which indicates one or more security parameters 22 usable to obtain the information 18 concealed by the second cell 16. The security parameter(s) 22 may for instance include a decryption key and/or a decryption algorithm identifier for decrypting the concealed information 18. Or, the security parameter(s) 22 may include mapping information for mapping non-concealed information that the second cell 16 transmits to the concealed information 18. Regardless, the wireless device 12 as shown receives this signaling 20 via the first cell 14. That is, the wireless device 12 receives, via the first cell 14, signaling 20 which indicates one or more security parameters 22 usable by the wireless device 12 to obtain the information 18 concealed by the second cell 16.

The signaling 20 may be secured in the sense that it is confidentiality protected, integrity protected, and/or otherwise secured against attack. The signaling 20 in these and other embodiments may be secured control plane signaling, e.g., secured non-access stratum (NAS) signaling. The secured NAS signaling may for instance comprise a Registration Accept message or a UE Configuration Update command. Alternatively or additionally, the wireless device 12 may receive the signaling 20 from a network node 24, e.g., a core network node in a core network (CN) 10. The network node 24 may for instance implement an Access and Mobility Function (AMF).

The network node 24 in some embodiments transmits the signaling 20 to the wireless device 12 based on authenticating that the wireless device 12 is indeed authorized to access the second cell 12 and/or the network with which the second cell 12 is associated. The network node 24 may for instance condition transmitting of the signaling 20 to the wireless device 12 on determining that, e.g., according to a subscription associated with the wireless device 12, the wireless device 12 is authorized to access the second cell 12 and/or the network with which the second cell 12 is associated. In these and other embodiments, then, the security parameter(s) 22 and thereby the concealed information 18 is obtainable only by wireless devices actually authorized to access the second cell 16 and/or the network with which the second cell 16 is associated. In this way, authorized wireless devices may obtain the concealed information 18 for identifying and/or accessing the second cell 16, but unauthorized wireless devices will not be able to obtain the security parameter(s) 22 needed to obtain the concealed information 18.

In any event, equipped with the security parameter(s) 22, the wireless device 12 may use the security parameter(s) 22 to obtain the information 18 concealed by the second cell 16. Where the security parameter(s) 22 include a decryption key and/or a decryption algorithm identifier, for instance, the wireless device 12 may use the decryption key and/or a decryption algorithm identified by the decryption algorithm identifier to decrypt the information 18 concealed by the second cell 16. Or, where the security parameter(s) 22 include mapping information, the wireless device 12 may use the mapping information to map the non-concealed information transmitted by the second cell 16 to the information 18 concealed by the second cell 16.

Having obtained the concealed information 18, the wireless device 12 may thereafter identify and/or access the second cell 16 using and/or based on the concealed information 18. For example, in some embodiments, the wireless device 12 may search for a cell associated with a certain network, e.g., associated with a certain CAG ID. Having obtained the security parameter(s) 22 via the first cell 14, the wireless device 12 as part of its search determines (e.g., via decryption or mapping) with which network (e.g., CAG ID) the second cell 16 is associated. Based on the second cell 16 being associated with the desired network (e.g., desired CAG ID), the wireless device 12 may proceed to access the second cell 16, e.g., by camping on or performing random access to the second cell 16.

Note that in some embodiments the wireless device 12 may receive the signaling 20 via the first cell 14 based on the wireless device 12 indicating that the device 12 targets the second cell 16 (or a network associated with the second cell 16) for access and/or based on the wireless device 12 being authorized to access the second cell 16 (or a network associated with the second cell). The wireless device 12 in this regard may for instance transmit secured control plane signaling 26 to the network node 24. In some embodiments, the secured control plane signaling 26 indicates one or more identifiers 28 associated with the second cell 16 or associated with a network of the second cell 16. Based on this signaling 26, the network node 24 may determine that the wireless device 12 desires access to the second cell 16 or a network associated with the second cell 16. The network node 24 may then determine whether the wireless device 12 is authorized to access the second cell 16 or a network associated with the second cell 16, e.g., by retrieving subscription information for the wireless device 12. Upon determining that the wireless device 12 is so authorized, the network node 24 may transmit to the wireless device 12 the signaling 20 indicating the security parameter(s) 22 for obtaining the information 18 concealed by the second cell 18.

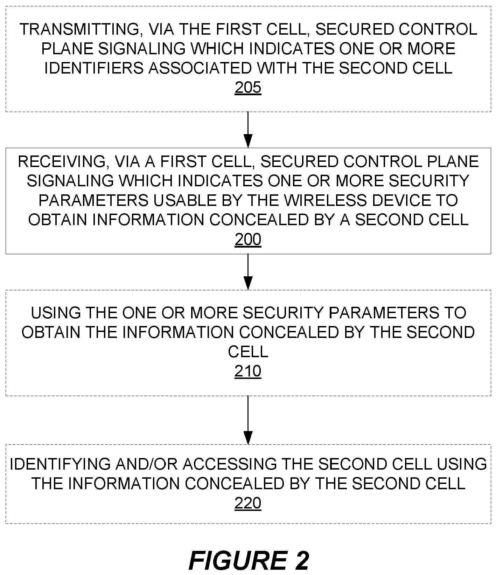

In view of the above modifications and variations, Figure 2 depicts a method performed by a wireless device 12 in accordance with the invention.

The method includes receiving, via a first cell 14, secured control plane signaling 20 which indicates one or more security parameters 22 usable by the wireless device 12 to obtain information 18 concealed by a second cell 16 (Block 200). The first cell 14 is a cell of a public network and the second cell 16 is a cell of a non-public network.

The information 18 concealed by the second cell 16 includes system information for the second cell 16, for example an identifier (e.g., a CAG ID, PLMN ID, or NID) associated with the second cell 16, and/or information that indicates with which network the second cell 16 is associated and/or with which type of network the second cell 16 is associated.

No matter the particular nature of the concealed information 18, the second cell 16 in some embodiments conceals the information by encrypting the information 18. In these and other embodiments, the one or more security parameters 22 may include a decryption key and/or a decryption algorithm identifier for decrypting the information 18 concealed by the second cell 16. In this case, the method may further comprise using the decryption key and/or a decryption algorithm identified by the decryption algorithm identifier to decrypt the information 18 concealed by the second cell 16.

In other embodiments, the one or more security parameters include mapping information for mapping (i) non-concealed information that the second cell 16 transmits; to (ii) the information 18 concealed by the second cell 16. For example, the non-concealed information may include a temporary or pseudonym identifier associated with the second cell, and the information 18 concealed by the second cell 16 may be an actual identifier associated with the second cell 16. For example, the temporary or pseudonym identifier may be a temporary or pseudonym closed access group, CAG, identifier, a temporary or pseudonym public land mobile network identity, or a temporary or pseudonym network identifier, and the actual identifier may be an actual CAG identifier, an actual public land mobile network identity, or an actual network identifier. Regardless, in some embodiments, the method further comprises using the mapping information to map the non-concealed information to the information concealed by the second cell. Alternatively or additionally, the method may further comprise obtaining validity information usable for determining whether the non-concealed information is valid, and using or not using the mapping information for mapping the non-concealed information to the information 18 concealed by the second cell 16, depending respectively on whether or not the non-concealed information is valid according to the validity information. In this case, the validity information may indicate an absolute or relative time period during which the non-concealed information is valid, in which case the method further comprises determining whether or not the non-concealed information is valid depending on whether or not a current time is within the absolute or relative time period during which the non-concealed information is valid. Or, in other embodiments, the validity information comprises a hash value, in which case the method further comprises calculating a test hash value using the non-concealed information and determining whether or not the non-concealed information is valid depending on whether or not the calculated test hash value matches the hash value comprising the validity information.

In other embodiments, the second cell 16 conceals the information 18 by refraining from transmitting the information 18.

Regardless, in some embodiments, the secured control plane signaling is secured NAS signaling. In these and other embodiments, the secured control plane signaling 20 may be received from a core network node, such as a network node that implements an AMF. Alternatively or additionally, the secured control plane signaling may be a Registration Accept message or a UE Configuration Update command.

In some embodiments, the method further comprises transmitting, via the first cell 14, secured control plane signaling 26 which indicates one or more identifiers 28 associated with the second cell 16 (Block 205). In this case, the secured control plane signaling 20 in some embodiments is received by the wireless device 12 responsive to the wireless device 12 transmitting the secured control plane signaling 26. The secured control plane signaling 26 may for instance be secured NAS signaling, such as secured NAS signaling that comprises a Registration message or a Security Mode Command, SMC, Complete message. Regardless, in some embodiments where the second cell 16 is associated with an SNPN, the one or more identifiers may include a public land mobile network identity, PLMN ID, and a network identifier, NID. In other embodiments where the second cell 16 is associated with a PNiNPN, the one or more identifiers may include a public land mobile network identity, PLMN ID. In still other embodiments, the one or more identifiers may include a closed access group, CAG, identifier that identifies a CAG to which the wireless devices targets access or may include a network slice identifier that identifies a network slice to which the wireless device targets access.

In any event, the method in some embodiments may also include using the one or more security parameters 22 to obtain the information 18 concealed by the second cell 16 (Block 210). Alternatively or additionally, the method may further include identifying and/or accessing the second cell 16 using the information 18 concealed by the second cell 16 (Block 220).

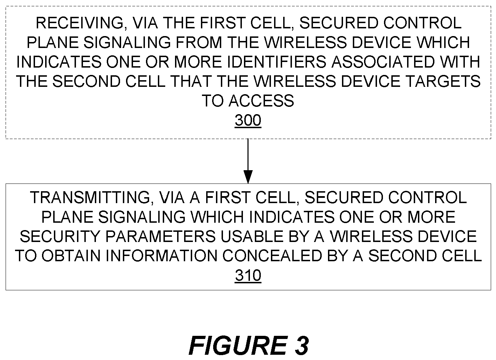

Figure 3 depicts a method performed by a network node 24 in accordance with the invention. The network node 24 is a core network node, such as a network node configured to implement an Access and Mobility Function, AMF. Regardless, the method includes transmitting, via a first cell 14, secured control plane signaling 20 which indicates one or more security parameters 22 usable by a wireless device 12 to obtain information 18 concealed by a second cell 16 (Block 310). The first cell 14 is a cell of a public network and the second cell 16 is a cell of a non-public network.

The information 18 concealed by the second cell 16 includes system information for the second cell 16, for example an identifier (e.g., a CAG ID, PLMN ID, or NID) associated with the second cell 16, and/or information that indicates with which network the second cell 16 is associated and/or with which type of network the second cell 16 is associated.

No matter the particular nature of the concealed information 18, the second cell 16 in some embodiments conceals the information by encrypting the information 18. In these and other embodiments, the one or more security parameters 22 may include a decryption key and/or a decryption algorithm identifier for decrypting the information 18 concealed by the second cell 16.

In other embodiments, the one or more security parameters include mapping information for mapping (i) non-concealed information that the second cell 16 transmits; to (ii) the information 18 concealed by the second cell 16. For example, the non-concealed information may include a temporary or pseudonym identifier associated with the second cell, and the information 18 concealed by the second cell 16 may be an actual identifier associated with the second cell 16. For example, the temporary or pseudonym identifier may be a temporary or pseudonym closed access group, CAG, identifier, a temporary or pseudonym public land mobile network identity, or a temporary or pseudonym network identifier, and the actual identifier may be an actual CAG identifier, an actual public land mobile network identity, or an actual network identifier. Regardless, in some embodiments, the method further transmitting, to the wireless device, validity information usable by the wireless device for determining whether the non-concealed information is valid. In this case, the validity information may indicate an absolute or relative time period during which the non-concealed information is valid. Or, in other embodiments, the validity information comprises a hash value.

In other embodiments, the second cell 16 conceals the information 18 by refraining from transmitting the information 18.

Regardless, in some embodiments, the secured control plane signaling is secured NAS signaling. Alternatively or additionally, the secured control plane signaling may be a Registration Accept message or a UE Configuration Update command.

In some embodiments, the secured control plane signaling 20 is transmitted in this way responsive to the network node 24 receiving, via the first cell 14, secured control plane signaling 26 from the wireless device 12 which indicates one or more identifiers 28 associated with the second cell 16 that the wireless device 12 targets to access (Block 300). in some embodiments where the second cell 16 is associated with an SNPN, the one or more identifiers may include a public land mobile network identity, PLMN ID, and a network identifier, NID. In other embodiments where the second cell 16 is associated with a PNiNPN, the one or more identifiers may include a public land mobile network identity, PLMN ID. In still other embodiments, the one or more identifiers may include a closed access group, CAG, identifier that identifies a CAG to which the wireless devices targets access or may include a network slice identifier that identifies a network slice to which the wireless device targets access.

Although not shown, other embodiments herein include a method performed by a wireless device 12. The method comprises transmitting, via a first cell 14, secured control plane signaling 26 which indicates one or more identifiers 28 associated with a second cell 16 that the wireless device 12 targets to access. In some embodiments, this secured control plane signaling 26 is secured NAS signaling. Alternatively or additionally, the secured control plane signaling 26 comprises a Registration message or a Security Mode Command, SMC, Complete message.

Also not shown, other embodiments herein include a method performed by a network node. The method comprises receiving, via a first cell 14, secured control plane signaling 26 from a wireless device 12 which indicates one or more identifiers 28 associated with a second cell 16 that the wireless device 12 targets to access.

The invention also includes corresponding apparatuses. Embodiments herein for instance include a wireless device 12 configured to perform any of the steps of any of the embodiments described above for wireless device 12.

Embodiments also include a wireless device 12 comprising processing circuitry and power supply circuitry. The processing circuitry is configured to perform any of the steps of any of the embodiments described above for the wireless device 12. The power supply circuitry is configured to supply power to the wireless device 12.

Embodiments further include a wireless device 12 comprising processing circuitry. The processing circuitry is configured to perform any of the steps of any of the embodiments described above for the wireless device 12. In some embodiments, the wireless device 12 further comprises communication circuitry.

Embodiments further include a wireless device 12 comprising processing circuitry and memory. The memory contains instructions executable by the processing circuitry whereby the wireless device 12 is configured to perform any of the steps of any of the embodiments described above for the wireless device 12.

Embodiments moreover include a user equipment (UE). The UE comprises an antenna configured to send and receive wireless signals. The UE also comprises radio front-end circuitry connected to the antenna and to processing circuitry, and configured to condition signals communicated between the antenna and the processing circuitry. The processing circuitry is configured to perform any of the steps of any of the embodiments described above for the wireless device 12. In some embodiments, the UE also comprises an input interface connected to the processing circuitry and configured to allow input of information into the UE to be processed by the processing circuitry. The UE may comprise an output interface connected to the processing circuitry and configured to output information from the UE that has been processed by the processing circuitry. The UE may also comprise a battery connected to the processing circuitry and configured to supply power to the UE.

Embodiments herein also include a network node 24 configured to perform any of the steps of any of the embodiments described above for the network node 24.

Embodiments also include a network node 24 comprising processing circuitry and power supply circuitry. The processing circuitry is configured to perform any of the steps of any of the embodiments described above for the network node 24. The power supply circuitry is configured to supply power to the network node 24.

Embodiments further include a network node 24 comprising processing circuitry. The processing circuitry is configured to perform any of the steps of any of the embodiments described above for the network node 24. In some embodiments, the radio network node 24 further comprises communication circuitry.

Embodiments further include a network node 24 comprising processing circuitry and memory. The memory contains instructions executable by the processing circuitry whereby the network node 24 is configured to perform any of the steps of any of the embodiments described above for the network node 24.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

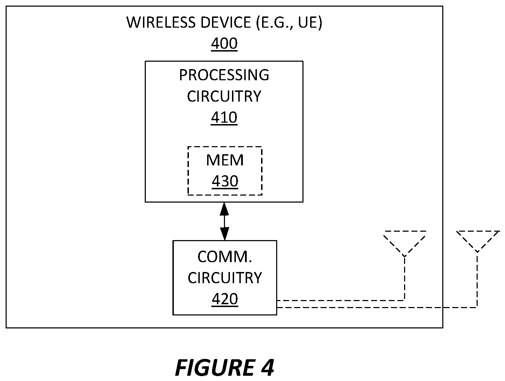

Figure 4 for example illustrates a wireless device 400 (e.g., wireless device 12) as implemented in accordance with one or more embodiments. As shown, the wireless device 400 includes processing circuitry 410 and communication circuitry 420. The communication circuitry 420 (e.g., radio circuitry) is configured to transmit and/or receive information to and/or from one or more other nodes, e.g., via any communication technology. Such communication may occur via one or more antennas that are either internal or external to the wireless device 400. The processing circuitry 410 is configured to perform processing described above, e.g., in Figure 2, such as by executing instructions stored in memory 430. The processing circuitry 410 in this regard may implement certain functional means, units, or modules.

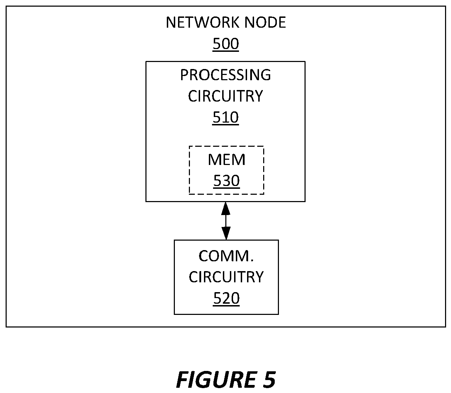

Figure 5 illustrates a network node 500 (e.g., network node 24) as implemented in accordance with one or more embodiments. As shown, the network node 500 includes processing circuitry 510 and communication circuitry 520. The communication circuitry 520 is configured to transmit and/or receive information to and/or from one or more other nodes, e.g., via any communication technology. The processing circuitry 510 is configured to perform processing described above, e.g., in Figure 3, such as by executing instructions stored in memory 530. The processing circuitry 510 in this regard may implement certain functional means, units, or modules.

Those skilled in the art will also appreciate that the invention further includes corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

Some embodiments herein are applicable in the context of a 5G system. The 5G System includes many features that require the introduction of new security mechanisms as compared to prior generation systems. For example, the 5G System integrates non-3GPP access (e.g. wireless local area network, WLAN) alongside 3GPP access (New Radio and Long Term Evolution, LTE) in a seamless manner. More precisely, in 5G, the user equipment (UE) can run the usual service access procedure independently of the underlying access.

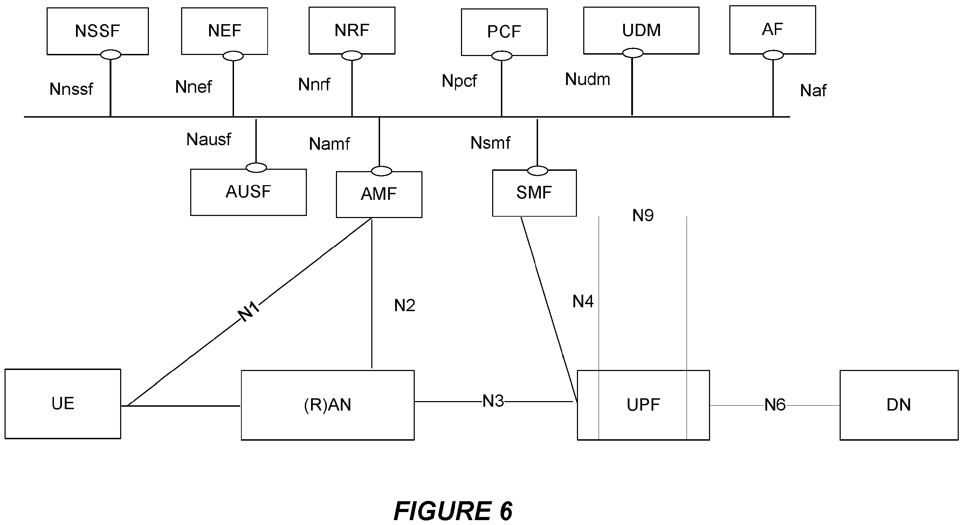

The 5G System consists of the Access network (AN) and the Core Network (CN). The AN is the network that allows the UE to gain connectivity to the CN, e.g. the base station which could be a gNB or an ng-eNB in 5G. The CN contains all the Network Functions (NF) ensuring a wide range of different functionalities such as session management, connection management, charging, authentication, etc. Figure 6 from 3GPP Technical Specification (TS) 23.501 v16.2.0 gives a high overview of the 5G architecture for the non-roaming scenario.

The communication links between the UE and the network (AN and CN) can be grouped in two different strata. The UE communicates with the CN over the Non-Access Stratum (NAS), and with the AN over the Access Stratum (AS). All the NAS communication takes place between the UE and the Access and connectivity Management Function (AMF) in the CN over the NAS protocol (N1 interface in Figure 6). Protection of the communications over these strata is provided by the NAS protocol (for NAS) and the Packet Data Convergence Protocol (PDCP) (for AS).

More details on the 5G security can be found in TS 33.501 v16.0.0, but in general, the security mechanisms for these protocols rely on multiple different security keys. In the 5G security specification, these keys are organized in a hierarchy. At the top level there is the long-term key part of the authentication credential and stored in the Subscriber Identification Module (SIM) card on the UE side and in the Unified Data Management (UDM) / Authentication credential Repository and Processing Function (ARPF) on the Home Public Land Mobile Network (PLMN) side.

A successful Primary Authentication run between the UE and the Authentication Function (AUSF) in the Home PLMN leads to the establishment of the K_{AUSF} key which is the second level key in the hierarchy. This key is not intended to leave the Home PLMN and is used for new features introduced in the 5G System, such as for the provisioning of parameters to the UE from the Home PLMN. More precisely, the K_{AUSF} key is used for the integrity protection of the messages delivered from the Home PLMN to the UE. As described in TS 33.501 v16.0.0, such new features include the Steering of Roaming (SoR) and the UDM parameter delivery procedures.

The K_{AUSF} is in used to derive another key that is sent to the serving PLMN (K_{SEAF}). This serving PLMN key (also referred to as an anchor key) is then used to derive the subsequent NAS and AS protection keys. These lower level keys together with other security parameters such as the cryptographic algorithms, the UE security capabilities, the value of the counters used for replay protection in the different protocols, etc., constitute what is defined as the 5G security context in TS 33.501 v16.0.0. It should be noted that K_{AUSF} is not part of the 5G security context since 5G security context resides in the serving network.

Release 16 on which 3GPP is currently working, will deliver several new features to the 5G System. One of these features is the support for the so-called Non-Public Network (NPN) as described in TS 23.501 v16.2.0. This feature is intended to help verticals make use of the 5G System services by either deploying their own standalone 5G System, a concept denoted by standalone Non-Public Network (SNPN) or via a PLMN, called Public Network integrated NPN (PNiNPN) NPN. One example context is a factory owner who wants to deploy his or her own 5G System to provide connectivity to the machines and employees.

The concept of Closed Access Group (CAG) enables the deployment of PNiNPN. A CAG can be thought of as a group of subscribers who are authorized to access and receive services from a PNiNPN. Within a PLMN, each CAG has a unique identifier (CAG ID). Heretofore, this CAG ID is included in the System Information (SI) and broadcasted by the RAN nodes. A UE transitioning from idle to connected state performs the automatic cell selection procedure while considering the broadcasted CAG ID, if any. This will prevent UEs that are not authorized to access a given PNiNPN from automatically selecting the associated cells.

There currently exist certain challenge(s) concerning CAG ID Privacy, e.g., as captured in clause 5.6.2 of TR 33.819 v1.2.0. There are two privacy issues, one related to the UE and one related to the network. For the UE privacy issue, according to known approaches for PNiNPN authorization, the UE includes the CAG ID it wants to access in the clear (i.e., not encrypted) at the AS layer during the Registration procedure. This proves vulnerable to the threat that an adversary may be able to eavesdrop on the UE Registration Procedure and learn the transmitted in-the-clear matched CAG ID. If the adversary is aware of sensitive CAGs (e.g., dedicated to Law Enforcement Agency (LEA)) they can infer the presence of members of such CAG (e.g., LEA)". For the network side, the NG-RAN broadcasting its list of CAG IDs allows an eavesdropper to positively identify an NG-RAN cell as a specific cell (e.g., serving a particular, sometimes small, set of Critical Infrastructure UEs).

For the UE privacy issue, one possible solution that mitigates the issue is that the UE does not send the CAG ID in-the-clear at the AS layer in the first place. Since this CAG ID is needed for authorization purposes by the AMF in the core network, it can as well be sent after authentication and NAS security establishment at the NAS layer. In such case, the CAG ID would be protected by the NAS security.

For the network issue, there are two solutions in clause 6.11 and 6.12 of TR 33.819 v1.2.0. Both solutions assume that the UE sends the CAG ID to the RAN node on the AS layer in an encrypted form. The solutions also require the RAN node to perform some additional steps in order to determine the CAG ID sent by the UE. While the solutions resolve both the UE and the network side privacy issues, they require additional steps from the network side, here the RAN node, to resolve the CAG ID sent by the UE. In addition, they entirely rely on the assumption that the UE sends the CAG ID to the RAN node, on the AS layer, in the first place.

Furthermore, the domain parameters used for example in the solution of clause 6.11, based on elliptic curve cryptography, would be known to a large group of entities, RAN nodes and UEs. In fact, those parameters are supposed to be public, so an attacker getting hold of such parameter can impersonate a RAN node and guess his way through to which CAG ID the UE wants to access. An attacker in possession of such parameters can also easily recover which CAG ID a RAN node supports. The solution in clause 6.12, based on the use of hash function, is also subject to the same attack since an attacker can impersonate a RAN node and by hashing several possible values of CAG IDs can guess his way through to get the UE to send the CAG ID it wants to access.

Similarly to the privacy sensitive nature of the CAG, the PLMN ID (and PLMN ID and NID) can be seen as privacy sensitive.

Certain aspects of the present disclosure and their embodiments may provide solutions to these or other challenges. Some embodiments address the network side privacy issue by providing the means to conceal the CAG ID information broadcasted by the RAN node or the cell from an eavesdropper and by making it available to only UEs that are authorized to access the cells associated with the concealed CAG ID. Alternatively or additionally, the PMN ID, or PLMND ID and NID, associated with a cell can be concealed.

Certain embodiments may provide one or more of the following technical advantage(s). Some embodiments do not require additional steps to be undertaken by the RAN node in order to determine the CAG ID (or PLMN ID or PLMN ID and NID) sent by the UE and thus has less computational overhead. Alternatively or additionally, some embodiments allow the UE to send the CAG ID (or PLMN ID, or PLMN ID and NID) on the NAS layer after authentication and thus rely on less signaling on the AS layer. Alternatively, the NG-RAN communicates the list of CAG IDs of the accessed cell to the 5GC such that the UE does not need to send the CAG ID in NAS. Alternatively or additionally, some embodiments conceal the association between the cells and the associated PNiNPN (or PLMN ID, or PLMN ID and NID) from an eavesdropper on the air interface.

More particularly, some embodiments conceal the association between the CAG ID and the corresponding PNiNPN from an eavesdropper on the air interface and make it only available to UEs authorized to access the PNiNPN in question.

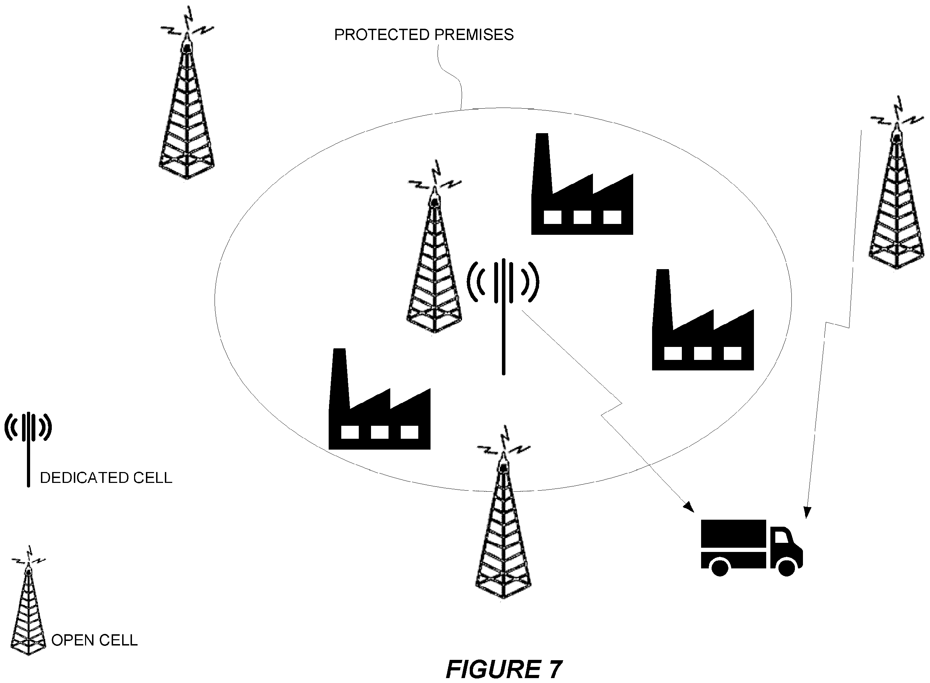

Some embodiments exploit a scenario where access to a privacy sensitive NPN is provided via dedicated cells (e.g., CAG cells) whose coverage overlaps with one or more open cells associated with a public network. Here, a dedicated cell is a cell dedicated to a certain network, e.g., NPN. The open cell could be a default cell or even a CAG cell but associated with less privacy sensitive PNiNPN. Figure 7 shows an example deployment of the cells such that some of them are open while some are dedicated, e.g., with a PNiNPN for a factory owner whose premises are shown as protected.

In some embodiments, at the authorization phase, a UE that needs to access the privacy sensitive PNiNPN uses the open cell for access and indicates the associated CAG ID. In case the UE is authorized, then the network provides the UE with the necessary information (e.g., security parameters) to determine the concealed cells associated with the privacy sensitive PNiNPN.

PLMN ID option: In the same way, an open cell may be deployed that can provide an authorized UE with necessary information to determine a concealed/protected cell associated with a privacy sensitive PLMN or PLMN+NID.

It should be noted that a protected cell and open cell can in reality be sharing the same RAN and even be the same cell. In this case, for the "open cell" access the cell is broadcasting System Information in clear text, whereas for the "protected cell" access the same cell is protecting the broadcasted System Information such that only entities having information to decrypt the protected information can read and make use of the information.

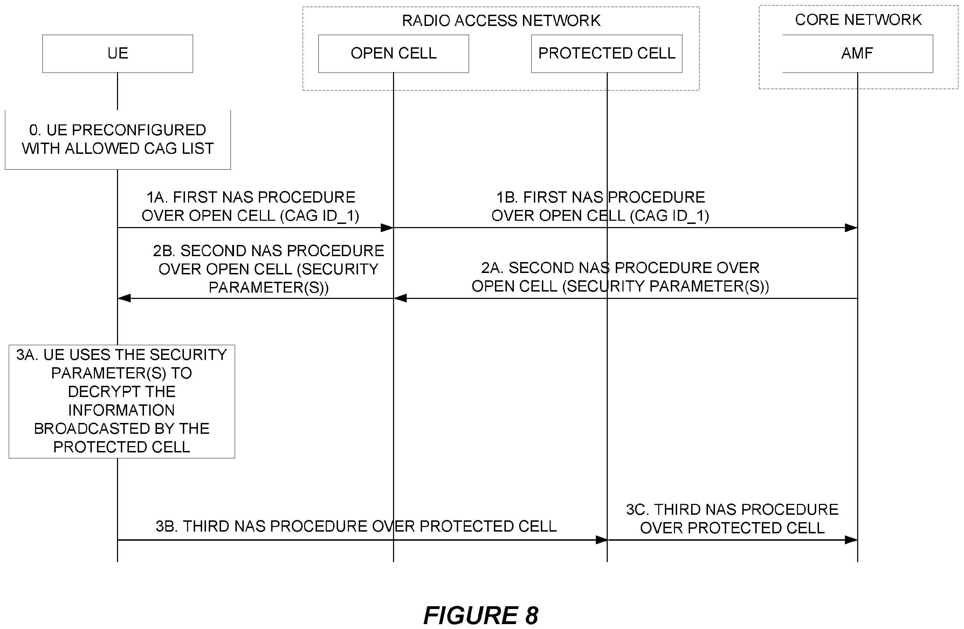

Figure 8 illustrates the steps undertaken by the network and the device in order to realize this feature in an embodiment where the protected cell broadcasts the relevant PNiNPN information encrypted and the UE receives the necessary parameters to decrypt the information during a first procedure using an open cell. This encrypted information could be simply the CAG ID associated with the privacy sensitive PNiNPN. In the example of Figure 8, then, the CAG ID exemplifies the concealed information 18 in Figure 1, and the parameters needed to decrypt that CAG ID exemplifies the security parameter(s) 22 in Figure 1.

Consider now the steps of Figure 8 in more detail.

Step 0. It is assumed that the UE has been pre-configured by the necessary parameters such as the list of allowed CAG IDs as described in 23.501 v16.2.0 clause 5.30.3. This could have been realized by an out-of-band mechanism or earlier via a run of the UE Configuration Update procedure.

PLMN ID option: PLMN ID or PLMN ID and NID is assumed to be pre-configured as per existing 3GPP specifications.

Steps 1A and 1B (collectively, Step 1) may exemplify Block 205 in Figure 2 and Block 300 in Figure 3. The UE accesses the network using the open cell and indicates to the network that it wants to access a given CAG ID (say ID_1). This is shown in Figure 8 Step 1 as a first NAS procedure over the open cell. This can be potentially done via a registration procedure over the NAS protocol after authentication and security establishment as shown in Figure 8. The goal here is to make sure that the network is aware one way or the other that this UE wants to access the PNiNPN associated with the CAG ID ID_1. In deployment scenarios where this UE is only for accessing this particular PNiNPN (a factory robot), then this information can be for example included in the subscription information and retrieved from the UDM. In such a case, the UE does not need to send the CAG ID in the first place.

As an alternative of UE providing the CAG ID, the UE provides other existing information e.g. Requested Network Slice Selection Assistance Information (NSSAI) and instead the NG-RAN provides the CAG IDs of the available cells in an NG Application Protocol (NGAP) message to AMF (e.g. at the same time as forwarding the NAS message from the UE). The AMF uses the provided list of CAG IDs and the Allowed CAG list from the subscription to derive which CAG IDs that are available, and the UE is allowed to access. The AMF may in addition use e.g. the Requested NSSAI and resulting Allowed NSSAI to further derive the list of CAG IDs.

PLMN ID option: 1a) UE provides PLMN ID (or PLMN ID and NID) in a secured NAS message e.g. Registration message or SMC complete message. 1b) RAN routes the UE request to an AMF configured to act as a default AMF for selecting a network.

Steps 2A and 2B. After a successful authorization, the network sends to the UE the necessary information so that the UE can access the network using the cells associated with the PNiNPN identified by CAG ID ID_1 (or alternatively to all CAG IDs the UE is allowed to access). This information can be in form of security parameters such as a decryption key and potentially a decryption algorithm identifier, etc. This is shown in Figure 8 as Steps 2A and 2B as the second NAS procedure. Step 2A may exemplify Block 200 in Figure 2 and Block 310 in Figure 3. And the second NAS procedure in Figure 8 may be used to transmit the secured control plane signaling 20 in Figure 1.

PLMN ID option: Not shown, but the default AMF selects a Target AMF serving the PLMN ID (or PLMN and NID) provided by the UE and reroutes the UE request to the Target AMF using existing reroute/re-allocation of AMF procedures. The Target AMF then sends to the UE the necessary information so that the UE can access the network using the cells associated with the PLMN ID (or PLMN ID and NID). This information can be in form of security parameters such as a decryption key and potentially a decryption algorithm identifier, etc.

Steps 3A, 3B, and 3C may exemplify Block 210 and/or Block 220 in Figure 2. The UE uses the received information to access the network through the protected cells. For example, in case the UE receives security parameters such as a decryption key, the UE then uses the key to decipher whatever information the protected cell is broadcasting. Based on that the UE determines the protected cell that is associated with the desired PNiNPN (or PLMN ID or PLMN ID and NID) and thus can select that one.

In another embodiment, the protected cell does not conceal information pertaining to the PNiNPN associated with the cell by encrypting that information, but rather conceals the information via a mapping. More particularly, the protected cell transmits in-the-clear (i.e., unencrypted) information that advertises the cell as being associated with some unspecified NPN or as being associated with an NPN with a certain identifier. But the advertised information is dynamically changed, e.g., from cell to cell, and does not indicate the actual NPN with which the cell is associated. This association (e.g., to the PNiNPN) is only made available to the UE after authorization. For example, the protected cell could broadcast a random CAG ID value but the mapping between the value broadcasted and the one the UE indicates in steps 1A and 1B of Figure 8 is sent to the UE in steps 2A and 2B of Figure 8. In order to prevent the automatic selection of the protected cells in steps 1A and 1B, they could be set as barred for other use. One can think of this random CAG ID as a pseudonym or a temporary identifier that is regularly changed. A UE that is offline for a longer time may then need to "start over" accessing an open cell as to be re-provisioned with the updated dynamic information.

There are different mechanisms for ensuring that the UE does not use outdated temporary CAG identifiers for the cell selection. For example, during provisioning in steps 2A and 2B, the UE receives a time parameter/value indicating for how long the received temporary identifiers are valid. This time value could be an expiry date upon which the UE must acquire new identifiers in order to determine the cells associated with the requested PNiNPNs. Such time value may exemplify validity information as discussed herein.

Another possibility is that each cell serving a number of PNiNPNs broadcasts a hash value in addition to the corresponding current temporary CAG identifiers. The hash value must be computed in a way that it changes in case the mapping changes or their value changes. For example, the hash value could be computed over the PNiNPNs identifiers served by the cell and the associated temporary identifiers. In such case, a temporary identifier change would result in a hash value change. Each time the UE attempts a cell selection for PNiNPN access, the UE computes the hash value based on the identifiers and the identifiers broadcasted by the cell. In case there is a mismatch, the UE needs to acquire new parameters, otherwise the UE proceeds with the selection. Such hash value may also exemplify validity information as discussed herein.

Alternatively, the cell broadcasts a hash value per each CAG identifier computed over the PNiNPN identifier and the temporary CAG identifier. In such case, for a given UE, the network does not need to reveal temporary identifier associated with PNiNPNs for which the UE is not authorized to access. The UE simply receives the temporary identifiers for which it is authorized and can check the hash value since it is PNiNPN-specific. In another embodiment, the hash value is calculated over the configured CAG ID from the UE allowed list and the corresponding temporary/pseudonym CAG identifier broadcasted by the cell.

In order to prevent an attacker from recovering the association, the hash value must be calculated using a so-called one-way function such as the Key Derivation Function (KDF) specified in Annex B.2.0 of TS 33.220 v16.0.0, used for cryptographic key generation. When using such functions, it is very unlikely for an attacker to determine the input of the function from its output.

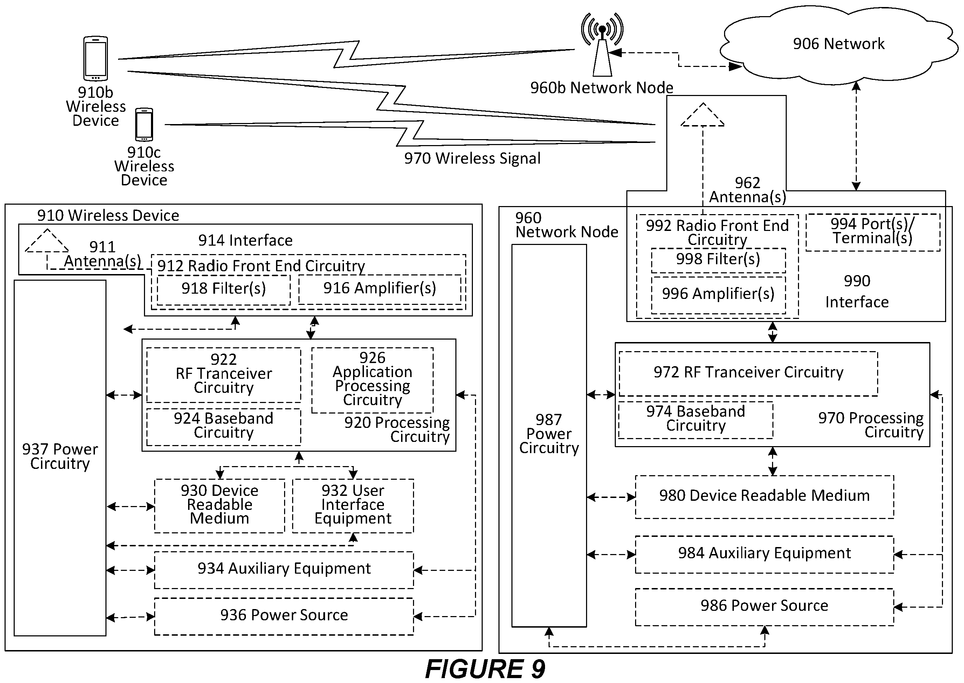

Although the subject matter described herein may be implemented in any appropriate type of system using any suitable components, the embodiments disclosed herein are described in relation to a wireless network, such as the example wireless network illustrated in Figure 9. For simplicity, the wireless network of Figure 9 only depicts network 906, network nodes 960 and 960b, and WDs 910, 910b, and 910c. In practice, a wireless network may further include any additional elements suitable to support communication between wireless devices or between a wireless device and another communication device, such as a landline telephone, a service provider, or any other network node or end device. Of the illustrated components, network node 960 and wireless device (WD) 910 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-loT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 906 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 960 and WD 910 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 9, network node 960 includes processing circuitry 970, device readable medium 980, interface 990, auxiliary equipment 984, power source 986, power circuitry 987, and antenna 962. Although network node 960 illustrated in the example wireless network of Figure 9 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 960 are depicted as single boxes located within a larger box, or nested within multiple boxes, in practice, a network node may comprise multiple different physical components that make up a single illustrated component (e.g., device readable medium 980 may comprise multiple separate hard drives as well as multiple RAM modules).

Similarly, network node 960 may be composed of multiple physically separate components (e.g., a NodeB component and a RNC component, or a BTS component and a BSC component, etc.), which may each have their own respective components. In certain scenarios in which network node 960 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 960 may be configured to support multiple radio access technologies (RATs). In such embodiments, some components may be duplicated (e.g., separate device readable medium 980 for the different RATs) and some components may be reused (e.g., the same antenna 962 may be shared by the RATs). Network node 960 may also include multiple sets of the various illustrated components for different wireless technologies integrated into network node 960, such as, for example, GSM, WCDMA, LTE, NR, WiFi, or Bluetooth wireless technologies. These wireless technologies may be integrated into the same or different chip or set of chips and other components within network node 960.

Processing circuitry 970 is configured to perform any determining, calculating, or similar operations (e.g., certain obtaining operations) described herein as being provided by a network node. These operations performed by processing circuitry 970 may include processing information obtained by processing circuitry 970 by, for example, converting the obtained information into other information, comparing the obtained information or converted information to information stored in the network node, and/or performing one or more operations based on the obtained information or converted information, and as a result of said processing making a determination.

Processing circuitry 970 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 960 components, such as device readable medium 980, network node 960 functionality. For example, processing circuitry 970 may execute instructions stored in device readable medium 980 or in memory within processing circuitry 970. Such functionality may include providing any of the various wireless features, functions, or benefits discussed herein. In some embodiments, processing circuitry 970 may include a system on a chip (SOC).

In some embodiments, processing circuitry 970 may include one or more of radio frequency (RF) transceiver circuitry 972 and baseband processing circuitry 974. In some embodiments, radio frequency (RF) transceiver circuitry 972 and baseband processing circuitry 974 may be on separate chips (or sets of chips), boards, or units, such as radio units and digital units. In alternative embodiments, part or all of RF transceiver circuitry 972 and baseband processing circuitry 974 may be on the same chip or set of chips, boards, or units

In certain embodiments, some or all of the functionality described herein as being provided by a network node, base station, eNB or other such network device may be performed by processing circuitry 970 executing instructions stored on device readable medium 980 or memory within processing circuitry 970. In alternative embodiments, some or all of the functionality may be provided by processing circuitry 970 without executing instructions stored on a separate or discrete device readable medium, such as in a hard-wired manner. In any of those embodiments, whether executing instructions stored on a device readable storage medium or not, processing circuitry 970 can be configured to perform the described functionality. The benefits provided by such functionality are not limited to processing circuitry 970 alone or to other components of network node 960, but are enjoyed by network node 960 as a whole, and/or by end users and the wireless network generally.

Device readable medium 980 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 970. Device readable medium 980 may store any suitable instructions, data or information, including a computer program, software, an application including one or more of logic, rules, code, tables, etc. and/or other instructions capable of being executed by processing circuitry 970 and, utilized by network node 960. Device readable medium 980 may be used to store any calculations made by processing circuitry 970 and/or any data received via interface 990. In some embodiments, processing circuitry 970 and device readable medium 980 may be considered to be integrated.

Interface 990 is used in the wired or wireless communication of signalling and/or data between network node 960, network 906, and/or WDs 910. As illustrated, interface 990 comprises port(s)/terminal(s) 994 to send and receive data, for example to and from network 906 over a wired connection. Interface 990 also includes radio front end circuitry 992 that may be coupled to, or in certain embodiments a part of, antenna 962. Radio front end circuitry 992 comprises filters 998 and amplifiers 996. Radio front end circuitry 992 may be connected to antenna 962 and processing circuitry 970. Radio front end circuitry may be configured to condition signals communicated between antenna 962 and processing circuitry 970. Radio front end circuitry 992 may receive digital data that is to be sent out to other network nodes or WDs via a wireless connection. Radio front end circuitry 992 may convert the digital data into a radio signal having the appropriate channel and bandwidth parameters using a combination of filters 998 and/or amplifiers 996. The radio signal may then be transmitted via antenna 962. Similarly, when receiving data, antenna 962 may collect radio signals which are then converted into digital data by radio front end circuitry 992. The digital data may be passed to processing circuitry 970. In other embodiments, the interface may comprise different components and/or different combinations of components.

In certain alternative embodiments, network node 960 may not include separate radio front end circuitry 992, instead, processing circuitry 970 may comprise radio front end circuitry and may be connected to antenna 962 without separate radio front end circuitry 992. Similarly, in some embodiments, all or some of RF transceiver circuitry 972 may be considered a part of interface 990. In still other embodiments, interface 990 may include one or more ports or terminals 994, radio front end circuitry 992, and RF transceiver circuitry 972, as part of a radio unit (not shown), and interface 990 may communicate with baseband processing circuitry 974, which is part of a digital unit (not shown).

Antenna 962 may include one or more antennas, or antenna arrays, configured to send and/or receive wireless signals. Antenna 962 may be coupled to radio front end circuitry 990 and may be any type of antenna capable of transmitting and receiving data and/or signals wirelessly. In some embodiments, antenna 962 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 962 may be separate from network node 960 and may be connectable to network node 960 through an interface or port.

Antenna 962, interface 990, and/or processing circuitry 970 may be configured to perform any receiving operations and/or certain obtaining operations described herein as being performed by a network node. Any information, data and/or signals may be received from a wireless device, another network node and/or any other network equipment. Similarly, antenna 962, interface 990, and/or processing circuitry 970 may be configured to perform any transmitting operations described herein as being performed by a network node. Any information, data and/or signals may be transmitted to a wireless device, another network node and/or any other network equipment.

Power circuitry 987 may comprise, or be coupled to, power management circuitry and is configured to supply the components of network node 960 with power for performing the functionality described herein. Power circuitry 987 may receive power from power source 986. Power source 986 and/or power circuitry 987 may be configured to provide power to the various components of network node 960 in a form suitable for the respective components (e.g., at a voltage and current level needed for each respective component). Power source 986 may either be included in, or external to, power circuitry 987 and/or network node 960. For example, network node 960 may be connectable to an external power source (e.g., an electricity outlet) via an input circuitry or interface such as an electrical cable, whereby the external power source supplies power to power circuitry 987. As a further example, power source 986 may comprise a source of power in the form of a battery or battery pack which is connected to, or integrated in, power circuitry 987. The battery may provide backup power should the external power source fail. Other types of power sources, such as photovoltaic devices, may also be used.

Alternative embodiments of network node 960 may include additional components beyond those shown in Figure 9 that may be responsible for providing certain aspects of the network node's functionality, including any of the functionality described herein and/or any functionality necessary to support the subject matter described herein. For example, network node 960 may include user interface equipment to allow input of information into network node 960 and to allow output of information from network node 960. This may allow a user to perform diagnostic, maintenance, repair, and other administrative functions for network node 960.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (loT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 910 includes antenna 911, interface 914, processing circuitry 920, device readable medium 930, user interface equipment 932, auxiliary equipment 934, power source 936 and power circuitry 937. WD 910 may include multiple sets of one or more of the illustrated components for different wireless technologies supported by WD 910, such as, for example, GSM, WCDMA, LTE, NR, WiFi, WiMAX, NB-loT, or Bluetooth wireless technologies, just to mention a few. These wireless technologies may be integrated into the same or different chips or set of chips as other components within WD 910.

Antenna 911 may include one or more antennas or antenna arrays, configured to send and/or receive wireless signals, and is connected to interface 914. In certain alternative embodiments, antenna 911 may be separate from WD 910 and be connectable to WD 910 through an interface or port. Antenna 911, interface 914, and/or processing circuitry 920 may be configured to perform any receiving or transmitting operations described herein as being performed by a WD. Any information, data and/or signals may be received from a network node and/or another WD. In some embodiments, radio front end circuitry and/or antenna 911 may be considered an interface.

As illustrated, interface 914 comprises radio front end circuitry 912 and antenna 911. Radio front end circuitry 912 comprise one or more filters 918 and amplifiers 916. Radio front end circuitry 914 is connected to antenna 911 and processing circuitry 920, and is configured to condition signals communicated between antenna 911 and processing circuitry 920. Radio front end circuitry 912 may be coupled to or a part of antenna 911. In some embodiments, WD 910 may not include separate radio front end circuitry 912; rather, processing circuitry 920 may comprise radio front end circuitry and may be connected to antenna 911. Similarly, in some embodiments, some or all of RF transceiver circuitry 922 may be considered a part of interface 914. Radio front end circuitry 912 may receive digital data that is to be sent out to other network nodes or WDs via a wireless connection. Radio front end circuitry 912 may convert the digital data into a radio signal having the appropriate channel and bandwidth parameters using a combination of filters 918 and/or amplifiers 916. The radio signal may then be transmitted via antenna 911. Similarly, when receiving data, antenna 911 may collect radio signals which are then converted into digital data by radio front end circuitry 912. The digital data may be passed to processing circuitry 920. In other embodiments, the interface may comprise different components and/or different combinations of components.

Processing circuitry 920 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 910 components, such as device readable medium 930, WD 910 functionality. Such functionality may include providing any of the various wireless features or benefits discussed herein. For example, processing circuitry 920 may execute instructions stored in device readable medium 930 or in memory within processing circuitry 920 to provide the functionality disclosed herein.

As illustrated, processing circuitry 920 includes one or more of RF transceiver circuitry 922, baseband processing circuitry 924, and application processing circuitry 926. In other embodiments, the processing circuitry may comprise different components and/or different combinations of components. In certain embodiments processing circuitry 920 of WD 910 may comprise a SOC. In some embodiments, RF transceiver circuitry 922, baseband processing circuitry 924, and application processing circuitry 926 may be on separate chips or sets of chips. In alternative embodiments, part or all of baseband processing circuitry 924 and application processing circuitry 926 may be combined into one chip or set of chips, and RF transceiver circuitry 922 may be on a separate chip or set of chips. In still alternative embodiments, part or all of RF transceiver circuitry 922 and baseband processing circuitry 924 may be on the same chip or set of chips, and application processing circuitry 926 may be on a separate chip or set of chips. In yet other alternative embodiments, part or all of RF transceiver circuitry 922, baseband processing circuitry 924, and application processing circuitry 926 may be combined in the same chip or set of chips. In some embodiments, RF transceiver circuitry 922 may be a part of interface 914. RF transceiver circuitry 922 may condition RF signals for processing circuitry 920.

In certain embodiments, some or all of the functionality described herein as being performed by a WD may be provided by processing circuitry 920 executing instructions stored on device readable medium 930, which in certain embodiments may be a computer-readable storage medium. In alternative embodiments, some or all of the functionality may be provided by processing circuitry 920 without executing instructions stored on a separate or discrete device readable storage medium, such as in a hard-wired manner. In any of those particular embodiments, whether executing instructions stored on a device readable storage medium or not, processing circuitry 920 can be configured to perform the described functionality. The benefits provided by such functionality are not limited to processing circuitry 920 alone or to other components of WD 910, but are enjoyed by WD 910 as a whole, and/or by end users and the wireless network generally.

Processing circuitry 920 may be configured to perform any determining, calculating, or similar operations (e.g., certain obtaining operations) described herein as being performed by a WD. These operations, as performed by processing circuitry 920, may include processing information obtained by processing circuitry 920 by, for example, converting the obtained information into other information, comparing the obtained information or converted information to information stored by WD 910, and/or performing one or more operations based on the obtained information or converted information, and as a result of said processing making a determination.

Device readable medium 930 may be operable to store a computer program, software, an application including one or more of logic, rules, code, tables, etc. and/or other instructions capable of being executed by processing circuitry 920. Device readable medium 930 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 920. In some embodiments, processing circuitry 920 and device readable medium 930 may be considered to be integrated.

User interface equipment 932 may provide components that allow for a human user to interact with WD 910. Such interaction may be of many forms, such as visual, audial, tactile, etc. User interface equipment 932 may be operable to produce output to the user and to allow the user to provide input to WD 910. The type of interaction may vary depending on the type of user interface equipment 932 installed in WD 910. For example, if WD 910 is a smart phone, the interaction may be via a touch screen; if WD 910 is a smart meter, the interaction may be through a screen that provides usage (e.g., the number of gallons used) or a speaker that provides an audible alert (e.g., if smoke is detected). User interface equipment 932 may include input interfaces, devices and circuits, and output interfaces, devices and circuits. User interface equipment 932 is configured to allow input of information into WD 910, and is connected to processing circuitry 920 to allow processing circuitry 920 to process the input information. User interface equipment 932 may include, for example, a microphone, a proximity or other sensor, keys/buttons, a touch display, one or more cameras, a USB port, or other input circuitry. User interface equipment 932 is also configured to allow output of information from WD 910, and to allow processing circuitry 920 to output information from WD 910. User interface equipment 932 may include, for example, a speaker, a display, vibrating circuitry, a USB port, a headphone interface, or other output circuitry. Using one or more input and output interfaces, devices, and circuits, of user interface equipment 932, WD 910 may communicate with end users and/or the wireless network, and allow them to benefit from the functionality described herein.

Auxiliary equipment 934 is operable to provide more specific functionality which may not be generally performed by WDs. This may comprise specialized sensors for doing measurements for various purposes, interfaces for additional types of communication such as wired communications etc. The inclusion and type of components of auxiliary equipment 934 may vary depending on the embodiment and/or scenario.

Power source 936 may, in some embodiments, be in the form of a battery or battery pack. Other types of power sources, such as an external power source (e.g., an electricity outlet), photovoltaic devices or power cells, may also be used. WD 910 may further comprise power circuitry 937 for delivering power from power source 936 to the various parts of WD 910 which need power from power source 936 to carry out any functionality described or indicated herein. Power circuitry 937 may in certain embodiments comprise power management circuitry. Power circuitry 937 may additionally or alternatively be operable to receive power from an external power source; in which case WD 910 may be connectable to the external power source (such as an electricity outlet) via input circuitry or an interface such as an electrical power cable. Power circuitry 937 may also in certain embodiments be operable to deliver power from an external power source to power source 936. This may be, for example, for the charging of power source 936. Power circuitry 937 may perform any formatting, converting, or other modification to the power from power source 936 to make the power suitable for the respective components of WD 910 to which power is supplied.

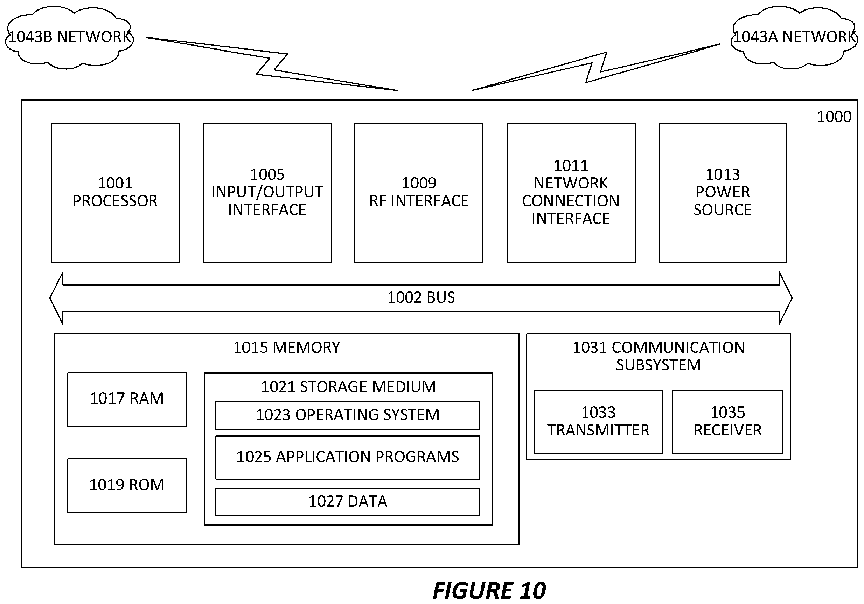

Figure 10 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 10200 may be any UE identified by the 3^{rd} Generation Partnership Project (3GPP), including a NB-loT UE, a machine type communication (MTC) UE, and/or an enhanced MTC (eMTC) UE. UE 1000, as illustrated in Figure 10, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 10 is a UE, the components discussed herein are equally applicable to a WD, and vice-versa.

In Figure 10, UE 1000 includes processing circuitry 1001 that is operatively coupled to input/output interface 1005, radio frequency (RF) interface 1009, network connection interface 1011, memory 1015 including random access memory (RAM) 1017, read-only memory (ROM) 1019, and storage medium 1021 or the like, communication subsystem 1031, power source 1033, and/or any other component, or any combination thereof. Storage medium 1021 includes operating system 1023, application program 1025, and data 1027. In other embodiments, storage medium 1021 may include other similar types of information. Certain UEs may utilize all of the components shown in Figure 10, or only a subset of the components. The level of integration between the components may vary from one UE to another UE. Further, certain UEs may contain multiple instances of a component, such as multiple processors, memories, transceivers, transmitters, receivers, etc.

In Figure 10, processing circuitry 1001 may be configured to process computer instructions and data. Processing circuitry 1001 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1001 may include two central processing units (CPUs). Data may be information in a form suitable for use by a computer.

In the depicted embodiment, input/output interface 1005 may be configured to provide a communication interface to an input device, output device, or input and output device. UE 1000 may be configured to use an output device via input/output interface 1005.

An output device may use the same type of interface port as an input device. For example, a USB port may be used to provide input to and output from UE 1000. The output device may be a speaker, a sound card, a video card, a display, a monitor, a printer, an actuator, an emitter, a smartcard, another output device, or any combination thereof. UE 1000 may be configured to use an input device via input/output interface 1005 to allow a user to capture information into UE 1000. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 10, RF interface 1009 may be configured to provide a communication interface to RF components such as a transmitter, a receiver, and an antenna. Network connection interface 1011 may be configured to provide a communication interface to network 1043a. Network 1043a may encompass wired and/or wireless networks such as a local-area network (LAN), a wide-area network (WAN), a computer network, a wireless network, a telecommunications network, another like network or any combination thereof. For example, network 1043a may comprise a Wi-Fi network. Network connection interface 1011 may be configured to include a receiver and a transmitter interface used to communicate with one or more other devices over a communication network according to one or more communication protocols, such as Ethernet, TCP/IP, SONET, ATM, or the like. Network connection interface 1011 may implement receiver and transmitter functionality appropriate to the communication network links (e.g., optical, electrical, and the like). The transmitter and receiver functions may share circuit components, software or firmware, or alternatively may be implemented separately.

RAM 1017 may be configured to interface via bus 1002 to processing circuitry 1001 to provide storage or caching of data or computer instructions during the execution of software programs such as the operating system, application programs, and device drivers. ROM 1019 may be configured to provide computer instructions or data to processing circuitry 1001. For example, ROM 1019 may be configured to store invariant low-level system code or data for basic system functions such as basic input and output (I/O), startup, or reception of keystrokes from a keyboard that are stored in a non-volatile memory. Storage medium 1021 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1021 may be configured to include operating system 1023, application program 1025 such as a web browser application, a widget or gadget engine or another application, and data file 1027. Storage medium 1021 may store, for use by UE 1000, any of a variety of various operating systems or combinations of operating systems.

Storage medium 1021 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1021 may allow UE 1000 to access computer-executable instructions, application programs or the like, stored on transitory or non-transitory memory media, to off-load data, or to upload data. An article of manufacture, such as one utilizing a communication system may be tangibly embodied in storage medium 1021, which may comprise a device readable medium.

In Figure 10, processing circuitry 1001 may be configured to communicate with network 1043b using communication subsystem 1031. Network 1043a and network 1043b may be the same network or networks or different network or networks. Communication subsystem 1031 may be configured to include one or more transceivers used to communicate with network 1043b. For example, communication subsystem 1031 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1033 and/or receiver 1035 to implement transmitter or receiver functionality, respectively, appropriate to the RAN links (e.g., frequency allocations and the like). Further, transmitter 1033 and receiver 1035 of each transceiver may share circuit components, software or firmware, or alternatively may be implemented separately.

In the illustrated embodiment, the communication functions of communication subsystem 1031 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1031 may include cellular communication, Wi-Fi communication, Bluetooth communication, and GPS communication. Network 1043b may encompass wired and/or wireless networks such as a local-area network (LAN), a wide-area network (WAN), a computer network, a wireless network, a telecommunications network, another like network or any combination thereof. For example, network 1043b may be a cellular network, a Wi-Fi network, and/or a near-field network. Power source 1013 may be configured to provide alternating current (AC) or direct current (DC) power to components of UE 1000.

The features, benefits and/or functions described herein may be implemented in one of the components of UE 1000 or partitioned across multiple components of UE 1000. Further, the features, benefits, and/or functions described herein may be implemented in any combination of hardware, software or firmware. In one example, communication subsystem 1031 may be configured to include any of the components described herein. Further, processing circuitry 1001 may be configured to communicate with any of such components over bus 1002. In another example, any of such components may be represented by program instructions stored in memory that when executed by processing circuitry 1001 perform the corresponding functions described herein. In another example, the functionality of any of such components may be partitioned between processing circuitry 1001 and communication subsystem 1031. In another example, the non-computationally intensive functions of any of such components may be implemented in software or firmware and the computationally intensive functions may be implemented in hardware.

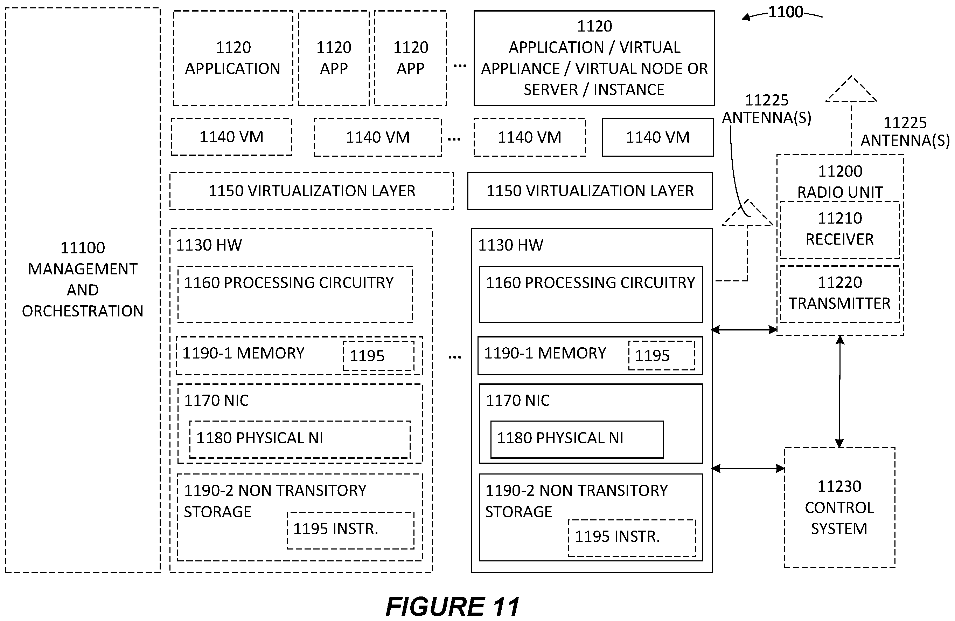

Figure 11 is a schematic block diagram illustrating a virtualization environment 1100 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1100 hosted by one or more of hardware nodes 1130. Further, in embodiments in which the virtual node is not a radio access node or does not require radio connectivity (e.g., a core network node), then the network node may be entirely virtualized.

The functions may be implemented by one or more applications 1120 (which may alternatively be called software instances, virtual appliances, network functions, virtual nodes, virtual network functions, etc.) operative to implement some of the features, functions, and/or benefits of some of the embodiments disclosed herein. Applications 1120 are run in virtualization environment 1100 which provides hardware 1130 comprising processing circuitry 1160 and memory 1190. Memory 1190 contains instructions 1195 executable by processing circuitry 1160 whereby application 1120 is operative to provide one or more of the features, benefits, and/or functions disclosed herein.

Virtualization environment 1100, comprises general-purpose or special-purpose network hardware devices 1130 comprising a set of one or more processors or processing circuitry 1160, which may be commercial off-the-shelf (COTS) processors, dedicated Application Specific Integrated Circuits (ASICs), or any other type of processing circuitry including digital or analog hardware components or special purpose processors. Each hardware device may comprise memory 1190-1 which may be non-persistent memory for temporarily storing instructions 1195 or software executed by processing circuitry 1160. Each hardware device may comprise one or more network interface controllers (NICs) 1170, also known as network interface cards, which include physical network interface 1180. Each hardware device may also include non-transitory, persistent, machine-readable storage media 1190-2 having stored therein software 1195 and/or instructions executable by processing circuitry 1160. Software 1195 may include any type of software including software for instantiating one or more virtualization layers 1150 (also referred to as hypervisors), software to execute virtual machines 1140 as well as software allowing it to execute functions, features and/or benefits described in relation with some embodiments described herein.

Virtual machines 1140, comprise virtual processing, virtual memory, virtual networking or interface and virtual storage, and may be run by a corresponding virtualization layer 1150 or hypervisor. Different embodiments of the instance of virtual appliance 1120 may be implemented on one or more of virtual machines 1140, and the implementations may be made in different ways.

During operation, processing circuitry 1160 executes software 1195 to instantiate the hypervisor or virtualization layer 1150, which may sometimes be referred to as a virtual machine monitor (VMM). Virtualization layer 1150 may present a virtual operating platform that appears like networking hardware to virtual machine 1140.

As shown in Figure 11, hardware 1130 may be a standalone network node with generic or specific components. Hardware 1130 may comprise antenna 11225 and may implement some functions via virtualization. Alternatively, hardware 1130 may be part of a larger cluster of hardware (e.g. such as in a data center or customer premise equipment (CPE)) where many hardware nodes work together and are managed via management and orchestration (MANO) 11100, which, among others, oversees lifecycle management of applications 1120.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1140 may be a software implementation of a physical machine that runs programs as if they were executing on a physical, non-virtualized machine. Each of virtual machines 1140, and that part of hardware 1130 that executes that virtual machine, be it hardware dedicated to that virtual machine and/or hardware shared by that virtual machine with others of the virtual machines 1140, forms a separate virtual network elements (VNE).

Still in the context of NFV, Virtual Network Function (VNF) is responsible for handling specific network functions that run in one or more virtual machines 1140 on top of hardware networking infrastructure 1130 and corresponds to application 1120 in Figure 11.

In some embodiments, one or more radio units 11200 that each include one or more transmitters 11220 and one or more receivers 11210 may be coupled to one or more antennas 11225. Radio units 11200 may communicate directly with hardware nodes 1130 via one or more appropriate network interfaces and may be used in combination with the virtual components to provide a virtual node with radio capabilities, such as a radio access node or a base station.

In some embodiments, some signalling can be effected with the use of control system 11230 which may alternatively be used for communication between the hardware nodes 1130 and radio units 11200.

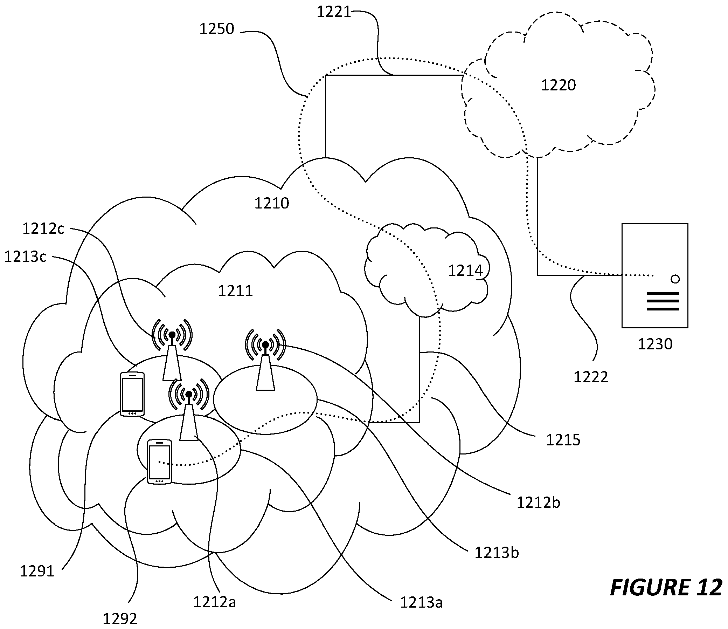

Figure 12 illustrates a telecommunication network connected via an intermediate network to a host computer in accordance with some embodiments. In particular, with reference to FIGURE 12, in accordance with an embodiment, a communication system includes telecommunication network 1210, such as a 3GPP-type cellular network, which comprises access network 1211, such as a radio access network, and core network 1214. Access network 1211 comprises a plurality of base stations 1212a, 1212b, 1212c, such as NBs, eNBs, gNBs or other types of wireless access points, each defining a corresponding coverage area 1213a, 1213b, 1213c. Each base station 1212a, 1212b, 1212c is connectable to core network 1214 over a wired or wireless connection 1215. A first UE 1291 located in coverage area 1213c is configured to wirelessly connect to, or be paged by, the corresponding base station 1212c. A second UE 1292 in coverage area 1213a is wirelessly connectable to the corresponding base station 1212a. While a plurality of UEs 1291, 1292 are illustrated in this example, the disclosed embodiments are equally applicable to a situation where a sole UE is in the coverage area or where a sole UE is connecting to the corresponding base station 1212.

Telecommunication network 1210 is itself connected to host computer 1230, which may be embodied in the hardware and/or software of a standalone server, a cloud-implemented server, a distributed server or as processing resources in a server farm. Host computer 1230 may be under the ownership or control of a service provider, or may be operated by the service provider or on behalf of the service provider. Connections 1221 and 1222 between telecommunication network 1210 and host computer 1230 may extend directly from core network 1214 to host computer 1230 or may go via an optional intermediate network 1220. Intermediate network 1220 may be one of, or a combination of more than one of, a public, private or hosted network; intermediate network 1220, if any, may be a backbone network or the Internet; in particular, intermediate network 1220 may comprise two or more sub-networks (not shown).

The communication system of Figure 12 as a whole enables connectivity between the connected UEs 1291, 1292 and host computer 1230. The connectivity may be described as an over-the-top (OTT) connection 1250. Host computer 1230 and the connected UEs 1291, 1292 are configured to communicate data and/or signaling via OTT connection 1250, using access network 1211, core network 1214, any intermediate network 1220 and possible further infrastructure (not shown) as intermediaries. OTT connection 1250 may be transparent in the sense that the participating communication devices through which OTT connection 1250 passes are unaware of routing of uplink and downlink communications. For example, base station 1212 may not or need not be informed about the past routing of an incoming downlink communication with data originating from host computer 1230 to be forwarded (e.g., handed over) to a connected UE 1291. Similarly, base station 1212 need not be aware of the future routing of an outgoing uplink communication originating from the UE 1291 towards the host computer 1230.

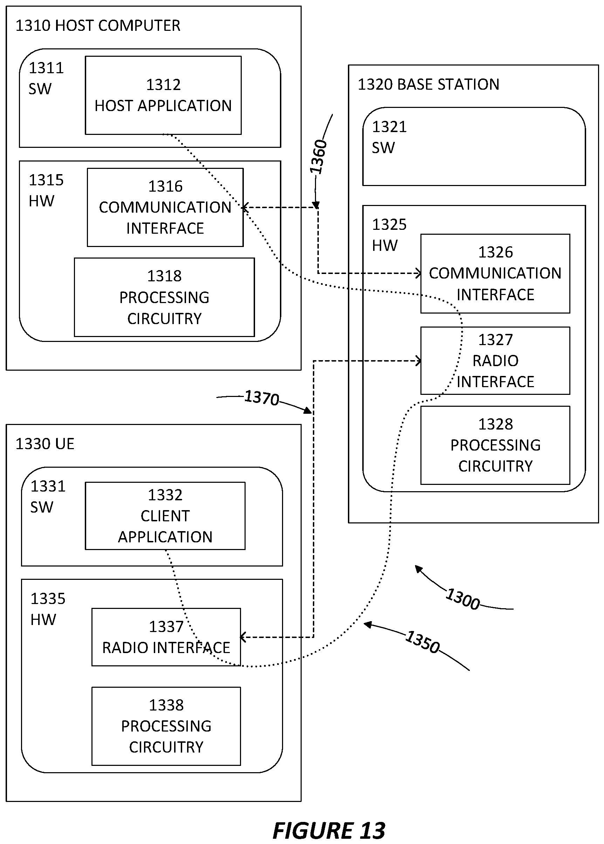

Example implementations, in accordance with an embodiment, of the UE, base station and host computer discussed in the preceding paragraphs will now be described with reference to Figure 13. Figure 13 illustrates host computer communicating via a base station with a user equipment over a partially wireless connection in accordance with some embodiments In communication system 1300, host computer 1310 comprises hardware 1315 including communication interface 1316 configured to set up and maintain a wired or wireless connection with an interface of a different communication device of communication system 1300. Host computer 1310 further comprises processing circuitry 1318, which may have storage and/or processing capabilities. In particular, processing circuitry 1318 may comprise one or more programmable processors, application-specific integrated circuits, field programmable gate arrays or combinations of these (not shown) adapted to execute instructions. Host computer 1310 further comprises software 1311, which is stored in or accessible by host computer 1310 and executable by processing circuitry 1318. Software 1311 includes host application 1312. Host application 1312 may be operable to provide a service to a remote user, such as UE 1330 connecting via OTT connection 1350 terminating at UE 1330 and host computer 1310. In providing the service to the remote user, host application 1312 may provide user data which is transmitted using OTT connection 1350.

Communication system 1300 further includes base station 1320 provided in a telecommunication system and comprising hardware 1325 enabling it to communicate with host computer 1310 and with UE 1330. Hardware 1325 may include communication interface 1326 for setting up and maintaining a wired or wireless connection with an interface of a different communication device of communication system 1300, as well as radio interface 1327 for setting up and maintaining at least wireless connection 1370 with UE 1330 located in a coverage area (not shown in Figure 13) served by base station 1320. Communication interface 1326 may be configured to facilitate connection 1360 to host computer 1310. Connection 1360 may be direct or it may pass through a core network (not shown in Figure 13) of the telecommunication system and/or through one or more intermediate networks outside the telecommunication system. In the embodiment shown, hardware 1325 of base station 1320 further includes processing circuitry 1328, which may comprise one or more programmable processors, application-specific integrated circuits, field programmable gate arrays or combinations of these (not shown) adapted to execute instructions. Base station 1320 further has software 1321 stored internally or accessible via an external connection.

Communication system 1300 further includes UE 1330 already referred to. Its hardware 1335 may include radio interface 1337 configured to set up and maintain wireless connection 1370 with a base station serving a coverage area in which UE 1330 is currently located. Hardware 1335 of UE 1330 further includes processing circuitry 1338, which may comprise one or more programmable processors, application-specific integrated circuits, field programmable gate arrays or combinations of these (not shown) adapted to execute instructions. UE 1330 further comprises software 1331, which is stored in or accessible by UE 1330 and executable by processing circuitry 1338. Software 1331 includes client application 1332. Client application 1332 may be operable to provide a service to a human or non-human user via UE 1330, with the support of host computer 1310. In host computer 1310, an executing host application 1312 may communicate with the executing client application 1332 via OTT connection 1350 terminating at UE 1330 and host computer 1310. In providing the service to the user, client application 1332 may receive request data from host application 1312 and provide user data in response to the request data. OTT connection 1350 may transfer both the request data and the user data. Client application 1332 may interact with the user to generate the user data that it provides.

It is noted that host computer 1310, base station 1320 and UE 1330 illustrated in Figure 13 may be similar or identical to host computer 1230, one of base stations 1212a, 1212b, 1212c and one of UEs 1291, 1292 of Figure 12, respectively. This is to say, the inner workings of these entities may be as shown in Figure 13 and independently, the surrounding network topology may be that of Figure 12.

In Figure 13, OTT connection 1350 has been drawn abstractly to illustrate the communication between host computer 1310 and UE 1330 via base station 1320, without explicit reference to any intermediary devices and the precise routing of messages via these devices. Network infrastructure may determine the routing, which it may be configured to hide from UE 1330 or from the service provider operating host computer 1310, or both. While OTT connection 1350 is active, the network infrastructure may further take decisions by which it dynamically changes the routing (e.g., on the basis of load balancing consideration or reconfiguration of the network).

Wireless connection 1370 between UE 1330 and base station 1320 is in accordance with the teachings of the embodiments described throughout this disclosure. One or more of the various embodiments improve the performance of OTT services provided to UE 1330 using OTT connection 1350, in which wireless connection 1370 forms the last segment.

A measurement procedure may be provided for the purpose of monitoring data rate, latency and other factors on which the one or more embodiments improve. There may further be an optional network functionality for reconfiguring OTT connection 1350 between host computer 1310 and UE 1330, in response to variations in the measurement results. The measurement procedure and/or the network functionality for reconfiguring OTT connection 1350 may be implemented in software 1311 and hardware 1315 of host computer 1310 or in software 1331 and hardware 1335 of UE 1330, or both. In embodiments, sensors (not shown) may be deployed in or in association with communication devices through which OTT connection 1350 passes; the sensors may participate in the measurement procedure by supplying values of the monitored quantities exemplified above, or supplying values of other physical quantities from which software 1311, 1331 may compute or estimate the monitored quantities. The reconfiguring of OTT connection 1350 may include message format, retransmission settings, preferred routing etc.; the reconfiguring need not affect base station 1320, and it may be unknown or imperceptible to base station 1320. Such procedures and functionalities may be known and practiced in the art. In certain embodiments, measurements may involve proprietary UE signaling facilitating host computer 1310's measurements of throughput, propagation times, latency and the like. The measurements may be implemented in that software 1311 and 1331 causes messages to be transmitted, in particular empty or 'dummy' messages, using OTT connection 1350 while it monitors propagation times, errors etc.

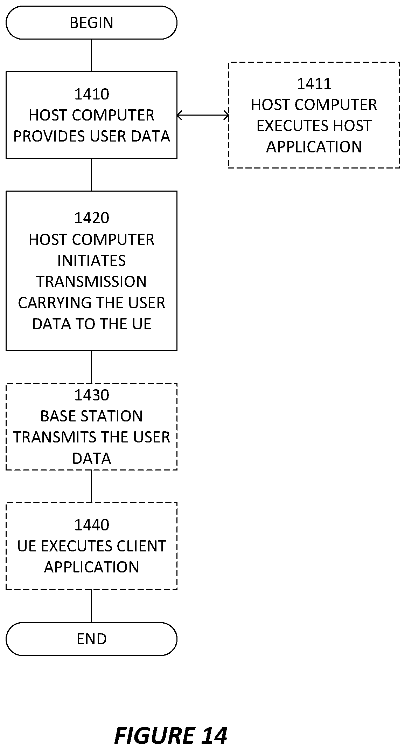

Figure 14 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 14 will be included in this section. In step 1410, the host computer provides user data. In substep 1411 (which may be optional) of step 1410, the host computer provides the user data by executing a host application. In step 1420, the host computer initiates a transmission carrying the user data to the UE. In step 1430 (which may be optional), the base station transmits to the UE the user data which was carried in the transmission that the host computer initiated, in accordance with the teachings of the embodiments described throughout this disclosure. In step 1440 (which may also be optional), the UE executes a client application associated with the host application executed by the host computer.

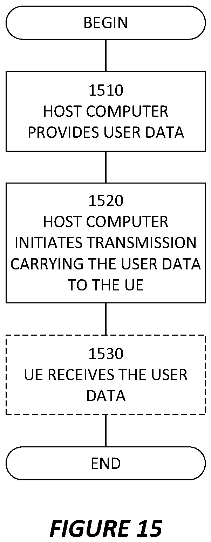

Figure 15 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 15 will be included in this section. In step 1510 of the method, the host computer provides user data. In an optional substep (not shown) the host computer provides the user data by executing a host application. In step 1520, the host computer initiates a transmission carrying the user data to the UE. The transmission may pass via the base station, in accordance with the teachings of the embodiments described throughout this disclosure. In step 1530 (which may be optional), the UE receives the user data carried in the transmission.

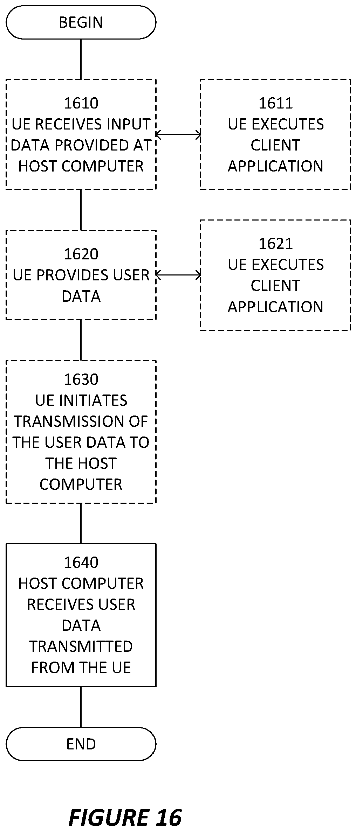

Figure 16 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 16 will be included in this section. In step 1610 (which may be optional), the UE receives input data provided by the host computer. Additionally or alternatively, in step 1620, the UE provides user data. In substep 1621 (which may be optional) of step 1620, the UE provides the user data by executing a client application. In substep 1611 (which may be optional) of step 1610, the UE executes a client application which provides the user data in reaction to the received input data provided by the host computer. In providing the user data, the executed client application may further consider user input received from the user. Regardless of the specific manner in which the user data was provided, the UE initiates, in substep 1630 (which may be optional), transmission of the user data to the host computer. In step 1640 of the method, the host computer receives the user data transmitted from the UE, in accordance with the teachings of the embodiments described throughout this disclosure.

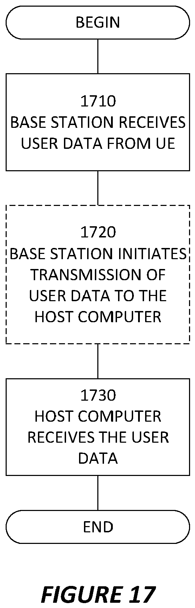

Figure 17 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 17 will be included in this section. In step 1710 (which may be optional), in accordance with the teachings of the embodiments described throughout this disclosure, the base station receives user data from the UE. In step 1720 (which may be optional), the base station initiates transmission of the received user data to the host computer. In step 1730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

In view of the above, then, embodiments herein generally include a communication system including a host computer. The host computer may comprise processing circuitry configured to provide user data. The host computer may also comprise a communication interface configured to forward the user data to a cellular network for transmission to a user equipment (UE). The cellular network may comprise a base station having a radio interface and processing circuitry, the base station's processing circuitry configured to perform any of the steps of any of the embodiments described above for a base station.

In some embodiments, the communication system further includes the base station.

In some embodiments, the communication system further includes the UE, wherein the UE is configured to communicate with the base station.

In some embodiments, the processing circuitry of the host computer is configured to execute a host application, thereby providing the user data. In this case, the UE comprises processing circuitry configured to execute a client application associated with the host application.

Embodiments herein also include a method implemented in a communication system including a host computer, a base station and a user equipment (UE). The method comprises, at the host computer, providing user data. The method may also comprise, at the host computer, initiating a transmission carrying the user data to the UE via a cellular network comprising the base station. The base station performs any of the steps of any of the embodiments described above for a base station.

In some embodiments, the method further comprising, at the base station, transmitting the user data.

In some embodiments, the user data is provided at the host computer by executing a host application. In this case, the method further comprises, at the UE, executing a client application associated with the host application.

Embodiments herein also include a user equipment (UE) configured to communicate with a base station. The UE comprises a radio interface and processing circuitry configured to perform any of the embodiments above described for a UE.

Embodiments herein further include a communication system including a host computer. The host computer comprises processing circuitry configured to provide user data, and a communication interface configured to forward user data to a cellular network for transmission to a user equipment (UE). The UE comprises a radio interface and processing circuitry. The UE's components are configured to perform any of the steps of any of the embodiments described above for a UE.

In some embodiments, the cellular network further includes a base station configured to communicate with the UE.

In some embodiments, the processing circuitry of the host computer is configured to execute a host application, thereby providing the user data. The UE's processing circuitry is configured to execute a client application associated with the host application.

Embodiments also include a method implemented in a communication system including a host computer, a base station and a user equipment (UE). The method comprises, at the host computer, providing user data and initiating a transmission carrying the user data to the UE via a cellular network comprising the base station. The UE performs any of the steps of any of the embodiments described above for a UE.

In some embodiments, the method further comprises, at the UE, receiving the user data from the base station.

Embodiments herein further include a communication system including a host computer. The host computer comprises a communication interface configured to receive user data originating from a transmission from a user equipment (UE) to a base station. The UE comprises a radio interface and processing circuitry. The UE's processing circuitry is configured to perform any of the steps of any of the embodiments described above for a UE.

In some embodiments the communication system further includes the UE.

In some embodiments, the communication system further including the base station. In this case, the base station comprises a radio interface configured to communicate with the UE and a communication interface configured to forward to the host computer the user data carried by a transmission from the UE to the base station.

In some embodiments, the processing circuitry of the host computer is configured to execute a host application. And the UE's processing circuitry is configured to execute a client application associated with the host application, thereby providing the user data.

In some embodiments, the processing circuitry of the host computer is configured to execute a host application, thereby providing request data. And the UE's processing circuitry is configured to execute a client application associated with the host application, thereby providing the user data in response to the request data.

Embodiments herein also include a method implemented in a communication system including a host computer, a base station and a user equipment (UE). The method comprises, at the host computer, receiving user data transmitted to the base station from the UE. The UE performs any of the steps of any of the embodiments described above for the UE.

In some embodiments, the method further comprises, at the UE, providing the user data to the base station.

In some embodiments, the method also comprises, at the UE, executing a client application, thereby providing the user data to be transmitted. The method may further comprise, at the host computer, executing a host application associated with the client application.

In some embodiments, the method further comprises, at the UE, executing a client application, and, at the UE, receiving input data to the client application. The input data is provided at the host computer by executing a host application associated with the client application. The user data to be transmitted is provided by the client application in response to the input data.

Embodiments also include a communication system including a host computer. The host computer comprises a communication interface configured to receive user data originating from a transmission from a user equipment (UE) to a base station. The base station comprises a radio interface and processing circuitry. The base station's processing circuitry is configured to perform any of the steps of any of the embodiments described above for a base station.

In some embodiments, the communication system further includes the base station.

In some embodiments, the communication system further includes the UE. The UE is configured to communicate with the base station.

In some embodiments, the processing circuitry of the host computer is configured to execute a host application. And the UE is configured to execute a client application associated with the host application, thereby providing the user data to be received by the host computer.

Embodiments moreover include a method implemented in a communication system including a host computer, a base station and a user equipment (UE). The method comprises, at the host computer, receiving, from the base station, user data originating from a transmission which the base station has received from the UE. The UE performs any of the steps of any of the embodiments described above for a UE.

In some embodiments, the method further comprises, at the base station, receiving the user data from the UE.

In some embodiments, the method further comprises, at the base station, initiating a transmission of the received user data to the host computer.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

## Claims

1. A method performed by a wireless device (12), the method comprising:
receiving (200), via a first cell (14) of a public network, secured control plane signaling (26) which indicates one or more security parameters (22) usable by the wireless device (12) to obtain information (18) concealed by a second cell (16) of a non-public network,
**characterised in that** the information (18) concealed by the second cell (16) includes system information (18) for the second cell (16).

2. The method of claim 1, wherein the information (18) concealed by the second cell (16) includes an identifier associated with the second cell (16), wherein the identifier is a closed access group, CAG, identifier or a network identifier.

3. The method of any of claims 1-2, wherein the information (18) concealed by the second cell (16) includes information (18) that indicates with which network the second cell (16) is associated and/or with which type of network the second cell (16) is associated.

4. The method of any of claims 1-3, wherein the one or more security parameters (22) include mapping information (18) for mapping (i) non-concealed information (18) that the second cell (16) transmits; to (ii) the information (18) concealed by the second cell (16), and wherein the method further comprises using the mapping information (18) to map the non-concealed information (18) to the information (18) concealed by the second cell (16).

5. The method of claim 4, wherein the non-concealed information (18) includes a temporary or pseudonym identifier associated with the second cell (16), and wherein the information (18) concealed by the second cell (16) is an actual identifier associated with the second cell (16).

6. The method of any of claims 4-5, further comprising obtaining validity information (18) usable for determining whether the non-concealed information (18) is valid, and wherein the method further comprises using or not using the mapping information (18) for mapping the non-concealed information (18) to the information (18) concealed by the second cell (16), depending respectively on whether or not the non-concealed information (18) is valid according to the validity information (18).

7. The method of any of claims 1-6, further comprising:
using (210) the one or more security parameters (22) to obtain the information (18) concealed by the second cell (16); and
identifying and/or accessing (220) the second cell (16) using the information (18) concealed by the second cell (16).

8. A method performed by a core network node (24), the method comprising:
transmitting (310), via a first cell (14) of a public network, secured control plane signaling (26) which indicates one or more security parameters (22) usable by a wireless device (12) to obtain information (18) concealed by a second cell (16) of a non-public network,
**characterised in that** the information (18) concealed by the second cell (16) includes system information (18) for the second cell (16).

9. The method of claim 8,
wherein the information (18) concealed by the second cell (16) includes an identifier associated with the second cell (16), wherein the identifier is a closed access group, CAG, identifier or a network identifier.

10. The method of any of claims 8-9,
wherein the information (18) concealed by the second cell (16) includes information (18) that indicates with which network the second cell (16) is associated and/or with which type of network the second cell (16) is associated.

11. The method of any of claims 8-10,
wherein the one or more security parameters (22) include mapping information (18) for mapping (i) non-concealed information (18) that the second cell (16) transmits; to (ii) the information (18) concealed by the second cell (16).

12. The method of claim 11,
wherein the non-concealed information (18) includes a temporary or pseudonym identifier associated with the second cell (16), and wherein the information (18) concealed by the second cell (16) is an actual identifier associated with the second cell (16).

13. The method of any of claims 11-12, further comprising transmitting, to the wireless device (12), validity information (18) usable by the wireless device (12) for determining whether the non-concealed information (18) is valid.

14. A wireless device (12) configured to perform the method of any of claims 1-7.

15. A core network node (24) configured to perform the method of any of claims 8-13.

16. A computer program comprising instructions which, when executed by at least one processor, causes the processor to carry out the method of any of claims 1-13.

## Patentansprüche

1. Verfahren, das von einer Drahtlosvorrichtung (12) durchgeführt wird, wobei das Verfahren umfasst:
Empfangen (200), über eine erste Zelle (14) eines öffentlichen Netzwerks, von gesicherter Steuerebenen-Signalisierung (26), die einen oder mehrere Sicherheitsparameter (22) angibt, die von der Drahtlosvorrichtung (12) verwendet werden können, um Informationen (18) zu erhalten, die von einer zweiten Zelle (16) eines nicht-öffentlichen Netzwerks verschleiert werden,
**dadurch gekennzeichnet, dass** die von der zweiten Zelle (16) verschleierten Informationen (18) Systeminformationen (18) für die zweite Zelle (16) beinhalten.

2. Verfahren nach Anspruch 1, wobei die von der zweiten Zelle (16) verschleierten Informationen (18) eine mit der zweiten Zelle (16) verknüpfte Kennung beinhalten, wobei die Kennung eine Closed-Access-Group-, CAG-, Kennung oder eine Netzwerkkennung ist.

3. Verfahren nach einem der Ansprüche 1-2, wobei die von der zweiten Zelle (16) verschleierten Informationen (18) Informationen (18) beinhalten, die angeben, mit welchem Netzwerk die zweite Zelle (16) verknüpft ist und/oder mit welchem Netzwerktyp die zweite Zelle (16) verknüpft ist.

4. Verfahren nach einem der Ansprüche 1-3, wobei der eine oder die mehreren Sicherheitsparameter (22) Zuordnungsinformationen (18) zum Zuordnen von (i) nicht verschleierten Informationen (18), die die zweite Zelle (16) überträgt; zu (ii) den von der zweiten Zelle (16) verschleierten Informationen (18) beinhalten, und wobei das Verfahren weiter das Verwenden der Zuordnungsinformationen (18) umfasst, um die nicht verschleierten Informationen (18) den von der zweiten Zelle (16) verschleierten Informationen (18) zuzuordnen.

5. Verfahren nach Anspruch 4, wobei die nicht verschleierten Informationen (18) eine temporäre oder pseudonyme Kennung beinhalten, die mit der zweiten Zelle (16) verknüpft ist, und wobei die von der zweiten Zelle (16) verschleierten Informationen (18) eine mit der zweiten Zelle (16) verknüpfte tatsächliche Kennung sind.

6. Verfahren nach einem der Ansprüche 4-5, das weiter das Erhalten von Gültigkeitsinformationen (18) umfasst, die zum Bestimmen, ob die nicht verschleierten Informationen (18) gültig sind, verwendet werden können, und wobei das Verfahren weiter das Verwenden oder Nichtverwenden der Zuordnungsinformationen (18) zum Zuordnen der nicht verschleierten Informationen (18) zu den von der zweiten Zelle (16) verschleierten Informationen (18) umfasst, jeweils abhängig davon, ob die nicht verschleierten Informationen (18) gemäß den Gültigkeitsinformationen (18) gültig sind oder nicht.

7. Verfahren nach einem der Ansprüche 1-6, weiter umfassend:
Verwenden (210) des einen oder der mehreren Sicherheitsparameter (22), um die von der zweiten Zelle (16) verschleierten Informationen (18) zu erhalten; und
Identifizieren der und/oder Zugreifen (220) auf die zweite Zelle (16) unter Verwendung der von der zweiten Zelle (16) verschleierten Informationen (18).

8. Verfahren, das von einem Kernnetzwerkknoten (24) durchgeführt wird, wobei das Verfahren umfasst:
Übertragen (310), über eine erste Zelle (14) eines öffentlichen Netzwerks, von gesicherter Steuerebenen-Signalisierung (26), die einen oder mehrere Sicherheitsparameter (22) angibt, die von einer Drahtlosvorrichtung (12) verwendet werden können, um Informationen (18) zu erhalten, die von einer zweiten Zelle (16) eines nicht-öffentlichen Netzwerks verschleiert werden,
**dadurch gekennzeichnet, dass** die von der zweiten Zelle (16) verschleierten Informationen (18) Systeminformationen (18) für die zweite Zelle (16) beinhalten.

9. Verfahren nach Anspruch 8,
wobei die von der zweiten Zelle (16) verschleierten Informationen (18) eine mit der zweiten Zelle (16) verknüpfte Kennung beinhalten, wobei die Kennung eine Closed-Access-Group-, CAG-, Kennung oder eine Netzwerkkennung ist.

10. Verfahren nach einem der Ansprüche 8-9,
wobei die von der zweiten Zelle (16) verschleierten Informationen (18) Informationen (18) beinhalten, die angeben, mit welchem Netzwerk die zweite Zelle (16) verknüpft ist und/oder mit welchem Netzwerktyp die zweite Zelle (16) verknüpft ist.

11. Verfahren nach einem der Ansprüche 8-10,
wobei der eine oder die mehreren Sicherheitsparameter (22) Zuordnungsinformationen (18) zum Zuordnen von (i) nicht verschleierten Informationen (18), die die zweite Zelle (16) überträgt; zu (ii) den von der zweiten Zelle (16) verschleierten Informationen (18) beinhalten.

12. Verfahren nach Anspruch 11,
wobei die nicht verschleierten Informationen (18) eine temporäre oder pseudonyme Kennung beinhalten, die mit der zweiten Zelle (16) verknüpft ist, und wobei die von der zweiten Zelle (16) verschleierten Informationen (18) eine mit der zweiten Zelle (16) verknüpfte tatsächliche Kennung sind.

13. Verfahren nach einem der Ansprüche 11-12,
das weiter das Übertragen von Gültigkeitsinformationen (18) an die Drahtlosvorrichtung (12) umfasst, die von der Drahtlosvorrichtung (12) verwendet werden können zum Bestimmen, ob die nicht verschleierten Informationen (18) gültig sind.

14. Drahtlosvorrichtung (12), die so konfiguriert ist, dass sie das Verfahren nach einem der Ansprüche 1-7 durchführt.

15. Kernnetzwerkknoten (24), der so konfiguriert ist, dass er das Verfahren nach einem der Ansprüche 8-13 durchführt.

16. Computerprogramm, das Anweisungen umfasst, die, wenn sie von mindestens einem Prozessor ausgeführt werden, den Prozessor veranlassen, das Verfahren nach einem der Ansprüche 1-13 auszuführen.

## Revendications

1. Procédé effectué par un dispositif sans fil (12), le procédé comprenant :
la réception (200), via une première cellule (14) d'un réseau public, d'une signalisation de plan de commande sécurisé (26) qui indique un ou plusieurs paramètres de sécurité (22) utilisables par le dispositif sans fil (12) pour obtenir des informations (18) masquées par une deuxième cellule (16) d'un réseau non public,
**caractérisé en ce que** les informations (18) masquées par la deuxième cellule (16) incluent des informations système (18) pour la deuxième cellule (16).

2. Procédé selon la revendication 1, dans lequel les informations (18) masquées par la deuxième cellule (16) incluent un identifiant associé à la deuxième cellule (16), dans lequel l'identifiant est un identifiant de groupe d'accès fermé, CAG, ou un identifiant de réseau.

3. Procédé selon l'une quelconque des revendications 1-2, dans lequel les informations (18) masquées par la deuxième cellule (16) incluent des informations (18) qui indiquent à quel réseau la deuxième cellule (16) est associée et/ou à quel type de réseau la deuxième cellule (16) est associée.

4. Procédé selon l'une quelconque des revendications 1-3, dans lequel les un ou plusieurs paramètres de sécurité (22) incluent des informations de mappage (18) pour mapper (i) des informations non masquées (18) que la deuxième cellule (16) transmet ; sur (ii) les informations (18) masquées par la deuxième cellule (16), et dans lequel le procédé comprend en outre l'utilisation des informations de mappage (18) pour mapper les informations non masquées (18) sur les informations (18) masquées par la deuxième cellule (16).

5. Procédé selon la revendication 4, dans lequel les informations non masquées (18) incluent un identifiant temporaire ou pseudonyme associé à la deuxième cellule (16), et dans lequel les informations (18) masquées par la deuxième cellule (16) sont un identifiant réel associé à la deuxième cellule (16).

6. Procédé selon l'une quelconque des revendications 4-5, comprenant en outre l'obtention d'informations de validité (18) utilisables pour déterminer si les informations non masquées (18) sont valides, et dans lequel le procédé comprend en outre l'utilisation ou la non-utilisation des informations de mappage (18) pour mapper les informations non masquées (18) sur les informations (18) masquées par la deuxième cellule (16), selon respectivement que les informations non masquées (18) sont valides ou non en fonction des informations de validité (18).

7. Procédé selon l'une quelconque des revendications 1-6, comprenant en outre :
l'utilisation (210) des un ou plusieurs paramètres de sécurité (22) pour obtenir les informations (18) masquées par la deuxième cellule (16) ; et
l'identification et/ou l'accès (220) de la deuxième cellule (16) en utilisant les informations (18) masquées par la deuxième cellule (16).

8. Procédé effectué par un noeud de réseau central (24), le procédé comprenant :
la transmission (310), via une première cellule (14) d'un réseau public, d'une signalisation de plan de commande sécurisé (26) qui indique un ou plusieurs paramètres de sécurité (22) utilisables par un dispositif sans fil (12) pour obtenir des informations (18) masquées par une deuxième cellule (16) d'un réseau non public,
**caractérisé en ce que** les informations (18) masquées par la deuxième cellule (16) incluent des informations système (18) pour la deuxième cellule (16).

9. Procédé selon la revendication 8,
dans lequel les informations (18) masquées par la deuxième cellule (16) incluent un identifiant associé à la deuxième cellule (16), dans lequel l'identifiant est un identifiant de groupe d'accès fermé, CAG, ou un identifiant de réseau.

10. Procédé selon l'une quelconque des revendications 8-9,
dans lequel les informations (18) masquées par la deuxième cellule (16) incluent des informations (18) qui indiquent à quel réseau la deuxième cellule (16) est associée et/ou à quel type de réseau la deuxième cellule (16) est associée.

11. Procédé selon l'une quelconque des revendications 8-10,
dans lequel les un ou plusieurs paramètres de sécurité (22) incluent des informations de mappage (18) pour mapper (i) des informations non masquées (18) que la deuxième cellule (16) transmet ; sur (ii) les informations (18) masquées par la deuxième cellule (16).

12. Procédé selon la revendication 11,
dans lequel les informations non masquées (18) incluent un identifiant temporaire ou pseudonyme associé à la deuxième cellule (16), et dans lequel les informations (18) masquées par la deuxième cellule (16) sont un identifiant réel associé à la deuxième cellule (16).

13. Procédé selon l'une quelconque des revendications 11-12,
comprenant en outre la transmission, au dispositif sans fil (12), d'informations de validité (18) utilisables par le dispositif sans fil (12) pour déterminer si les informations non masquées (18) sont valides.

14. Dispositif sans fil (12) configuré pour effectuer le procédé selon l'une quelconque des revendications 1-7.

15. Noeud de réseau central (24) configuré pour effectuer le procédé selon l'une quelconque des revendications 8-13.

16. Programme informatique comprenant des instructions qui, lorsqu'elles sont exécutées par au moins un processeur, amènent le processeur à réaliser le procédé selon l'une quelconque des revendications 1-13.
